# EUROPÄISCHE PATENTSCHRIFT

(11) **EP 0 867 346 B1**
(45) Veröffentlichungstag und Bekanntmachung des Hinweises auf die Patenterteilung: **28.01.2004**
(21) Anmeldenummer: 98105551.0
(22) Anmeldetag: 26.03.1998
(51) Int. Cl.: B60R 21/20

(54) **Airbagvorrichtung und Auslöseverfahren dafür**
Air bag and releasing method therefor
Coussin de sécurité gonflable et procédé de déclenchement de ce coussin

(30) Priorität: 26.03.1997 DE 19712782; 24.06.1997 DE 19726878; 05.08.1997 DE 19733896
(43) Veröffentlichungstag der Anmeldung: 30.09.1998
(73) Patentinhaber: Volkswagen AG, 38436 Wolfsburg (DE)
(72) Erfinder: Müller, Olaf, 65428 Rüsselsheim (DE)
(74) Vertreter: Lindner, Manfred Klaus, Dipl.-Phys.

(56) Entgegenhaltungen:
- DE-A- 4 022 881
- DE-A- 4 217 174

## Beschreibung

Die Erfindung betrifft eine Airbagvorrichtung beispielsweise für ein Fahrzeug mit einer in Folge einer Sensorauslösung durch einen Gasgenerator mit Treibgas aufblasbaren Gassackeinrichtung, die beim Aufblasen in einen Fahrgastraum des Fahrzeugs, oder allgemein zur Position einer zu schützenden Person, hin vorschiebbar ist.

Eine derartige Airbagvorrichtung zum Schutze von Insassen in Fortbewegungsmitteln, wie insbesondere Kraftfahrzeugen, ist beispielsweise im Lenkrad vor einem Fahrersitz und/oder in der Armaturentafel vor einem Beifahrersitz eines Kraftfahrzeuges untergebracht und von einer Abdeckung bedeckt, die z.B. als Kunststoffinnenverkleidung ausgebildet ist. Beim Auslösen der Airbagvorrichtung, wie aus der Praxis bekannt ist, sprengt der sich öffnende Airbag oder Gassack die Abdeckung nach innen in den Fahrgastraum ab. Dabei kann der Fahrzeuginsasse verletzt werden, insbesondere wenn er sich nahe an der Airbagöffnung befindet und das abgesprengte Teil ihn mit voller Wucht im Gesicht oder am Hals trifft. Derartige Verletzungen können auch bei einem in der DE 40 22 881 C2 beschriebenen Gassacksystem auftreten, das eine Deckelklappe aufweist, die eine Austrittsöffnung für den Gassack bedeckt und sich in das Innere des Fahrgastraumes öffnet, wenn sich der Gassack aufbläst und durch die Öffnung austritt.

Weiterhin ist aus der DE 42 17 174 A1 eine Airbagvorrichtung bekannt, die an einem schwenkbaren Tragteil angeordnet ist, welches normalerweise eine Austrittsöffnung eines Gassackes der Airbagvorrichtung mit einer gepolsterten Abdeckseite verschließt und bei einem Unfall automatisch in eine Lage schwenkt, in der der nunmehr aufzublasende Gassack aus der Öffnung auszutreten vermag. Diese Technik hat u.a. folgende Nachteile: 1. Der Gassack selbst muß zusammen mit dem zugehörigen Gasgenerator und dem Tragteil einschließlich Klappe verschwenkt werden, was viel Energie kostet und übermäßig viel Zeit in Anspruch nimmt. 2. Die Schwenkbewegung der Klappe und des Gassackes beeinflußt seine Aufblasbewegung, so daß er nicht zuverlässig und eindeutig vorgebbar zur Sicherung eines Insassen zur Verfügung steht. 3. Zur Bewegung der gesamten Einheit ist eine sehr starke und daher gewichts- und kostenintensive Antriebseinheit erforderlich.

Ziel der vorliegenden Erfindung ist es, eine Airbagvorrichtung und ein Betriebsverfahren für deren Auslösung derart zu verbessern, daß neben einer Verminderung der Gefahr einer Verletzung eines Fahrzeuginsassen durch die Airbagvorrichtung letztere schnell und zuverlässig betrieben und kostengünstig hergestellt werden kann.

Dieses Ziel wird erfindungsgemäß durch eine Airbagvorrichtung mit den Merkmalen des Anspruchs 1 sowie verfahrensmäßig gemäß Anspruch 30 erreicht. Die jeweils abhängigen Ansprüche betreffen vorteilhafte Ausgestaltungen der Erfindung.

Die erfindungsgemäße Airbagvorrichtung enthält eine Abdeckeinrichtung, die sich beim Öffnen des Gassackes zumindest nicht wesentlich in den Fahrgastraum bewegt; wie dies bei bekannten Abdeckeinrichtungen durch deren Absprengen oder durch Klappen um ein Scharnier erfolgt, wodurch diese bekannten Abdeckeinrichtungen vollständig auf eine zu schützende Person hin bewegt werden, sondern die sich in etwa innerhalb der Außenkontur eines jeweiligen die Airbagvorrichtung aufnehmenden Einbauteils, beispielsweise nach oben, nach unten oder seitwärts in der Armaturentafel bewegt oder verschiebt. Somit entfällt das Verletzungspotential einer sich stoßartig in Richtung auf den Fahrzeuginsassen bewegenden Abdeckung.

Vorzugsweise erfolgt der Antrieb des bewegbaren Bauteils von der Treibgasladung des Gasgenerators. Für den Antrieb kann jedoch auch von einer anderen Energiequelle, wie z.B. von einer zweiten Zündladung oder dergleichen, gesorgt werden. Die Zündung der das bewegbare Bauteil antreibenden Energiequelle kann zeitlich vor der Zündung oder zumindest Wirkung des das Füllgas erzeugenden Gasgenerators liegen, so daß die Freigabe der Austrittsöffnung für den Gassack vor dem Beginn des Füllvorganges des Gassackes einsetzt und vorzugsweise zumindest soweit erfolgt ist, daß sich der Gassack ungehindert in der gewünschten Richtung auf eine Insassenposition hin ausbreiten kann. Als weitere Alternative kann das bewegbare Bauteil über geeignete Einrichtungen mittels des Füllgases beaufschlagt werden, und letzteres dann, wenn die Abdeckeinrichtungen, die beispielsweise durch eine oder mehrere Abdeckklappe(n) gebildet sein können, zumindest teilweise geöffnet sind, in die Gassackeinrichtung oder den Airbag geleitet werden. Insbesondere kann dadurch gewährleistet werden, daß die Abdeckeinrichtungen behinderungsfrei z.B. neben den Unterbringungsraum für den Gassack in das Innere des jeweiligen die Airbagvorrichtung aufnehmenden Einbauteils, wie ein Airbagmodul oder dessen Gehäuse, zurückgezogen werden können. Hierbei können die Abdeckklappen beispielsweise seitlich vom Unterbringungsraum in ihrer zurückgezogenen Position angeordnet werden.

Das bewegbare Bauteil kann in Ruhestellung ohne Verbindung mit der Abdeckeinrichtung sein und erst im Auslösefall mit dieser gekoppelt werden. Da die Abdeckklappe(n) bevorzugt einteilig mit einem beispielsweise vorgesehenen Armaturentafelkörper hergestellt ist/sind, ist/sind ihre Ausgangslage, d.h. bei nicht ausgelöstem Airbag lagegesichert. Beispielsweise sind durch Laser oder Schneidmesser die auch als Blende(n) zu betrachtende(n) Abdeckklappe(n) derart "vorgetrennt", daß sie sich bei Beaufschlagung mit Kraft entsprechend der Erfindung von dem Armaturentafelkörper trennen. Alternativ besteht eine feste Kopplung zwischen dein Bauteil und der Abdeckeinrichtung, so daß das Bauteil in seiner Ruhestellung die Abdekkeinrichtung in einer Schließstellung halten kann, in der sie eine Austrittsöffnung für den Gassack verschlossen hält.

Die die Airbagvorrichtung zum Fahrgastraum, oder allgemein zur Position einer zu schützenden Position, hin begrenzende Abdeckeinrichtung ist zweckmäßigerweise an einer Führung geführt, so daß eine bestimmte Bewegungsbahn der Abdeckeinrichtung vorgegeben ist, wenn sie sich öffnet. Die Abdeckeinrichtung kann sich dabei alternativ in verschiedenen Bewegungsrichtungen bewegen, verschieben, drehen oder klappen, wobei sie sich im wesentlichen innerhalb der Außenkontur der Airbagvorrichtung oder benachbarter Teile bewegt, jedoch nicht in den Fahrgastraum vordringt. So kann die Abdeckeinrichtung blendenförmige Elemente aufweisen, die sich linear verschieben oder radial voneinander entfernen. Vorzugsweise enthält die Abdeckeinrichtung eine oder mehrere und insbesondere zwei Abdeckklappe(n), die von dem bewegbaren Bauteil ins Innere der Airbagvorrichtung bewegt wird/werden, wobei jede Abdeckklappe eine Schwenkbewegung ausführt.

Beispielsweise ist das bewegbare Bauteil das Gehäuse des Gasgenerators, das auf einer Bewegungsbahn in der Airbagvorrichtung geführt ist und nach dem Zünden der Treibgasladung durch seine Bewegung die Abdeckklappen von der Austrittsöffnung für den Gassack entfernt. Das bewegte Bauteil kann jedoch auch von einem anderen Teil wie einem Kolben oder einem Drehschieber angetrieben oder bewegt werden, wobei dieses andere Teil von der Treibgasladung des Gasgenerators oder von einem eigenen Antrieb bewegt werden kann.

Der Gasgenerator kann als Hybridgenerator ausgebildet sein, der zusätzliche, mit festem Sprengstoff gefüllte Zündkammern zum Zünden des Gases und zum Aufbrechen der Trennwände aufweist.

Die Airbagvorrichtung kann mehrere Gasgeneratoren mit mehreren Gassäcken aufweisen, die eine einzeln steuerbare Gassackfront bilden können, insbesondere bei mehrstufigen Gasgeneratoren, die mehrere nacheinander zündbare Treibladungen aufweisen.

Um die Abdeckeinrichtung für ein Zurückziehen geeignet auszubilden, können im Fall von beispielsweise zwei Abdeckklappen letztere, worauf auch bereits weiter oben eingegangen wurde, integraler Bestandteil beispielsweise eines die vordere Front zu einem Insassen hin bildende Armaturentafelkörpers sein, der einen Armaturentafelträger, eine Schaumschicht und eine Folie enthält. Der Armaturentafelträger, die Schaumschicht und die Folie sind dabei vorzugsweise mittels Laser oder z.B. lasergesteuertem Trennmesser "vorausgeschnitten". Weiterhin sind dabei bevorzugt die Abdeckklappen beispielsweise über Rückzugeinrichtungen mit dem bewegbaren Bauteil verbunden und werden bei dessen Bewegung z.B. infolge einer Zündung aus dem Armaturentafelträger gerissen und insbesondere über Führungen seitlich geschwenkt, so daß sie die Austrittsöffnung des Airbags freigeben.

Bei einer Hartkunststöffarmaturentafel, beispielsweise aus Polypropylen, kann die Abdeckeinrichtung zusammen mit dem Armaturentafelkörper aus einem Stück verspritzt sein. Die beim Zurückziehen der Abdeckeinrichtung erforderlichen Trennstellen zwischen der Abdeckeinrichtung und dem Armaturentafelkörper lassen sich durch entsprechende Verdünnungen bzw. Materialschwächungen, die z.B. in Zickzackform vorzugsweise an der Innenseite beispielsweise durch einen Laserstrahl eingeprägt sind, herstellen.

Erfindungsgemäß besteht eine weitere Fortbildung darin, daß Steuereinrichtungen vorgesehen sind, durch die der vom Gasgenerator erzeugte Gasdruck nach der Sensorauslösung zunächst wenigstens überwiegend zum Antrieb des Bauteils und erst nach einem vorgebbaren Bewegungsweg oder nach einer vorgebbaren Bewegungsdauer des Bauteils vollständig zum Aufblasen des Gassackes bereitgestellt wird.

Dadurch wird in vorteilhafter Weise erreicht, daß die Abdeckeinrichtung zuverlässig und schnell geöffnet wird, bevor der Gassack gefüllt wird und sich dadurch in Innere des Fahrgastraums vorschiebt. Eine Behinderung des Aufblasens und Vorschiebens des Gassackes oder Airbags in Folge einer zu späten oder unvollständigen Öffnung der Abdeckeinrichtung wird dadurch vermieden.

Vorzugsweise sind die Steuereinrichtungen derart ausgestaltet, daß der vom Gasgenerator erzeugte Gasdruck nach der Sensorauslösung wenigstens nahezu vollständig bis auf höchstens geringe Leckageverluste zum Antrieb des Bauteils und erst nach einem vorgebbaren Bewegungsweg oder nach einer vorgebbaren Bewegungsdauer des Bauteils vollständig zum Aufblasen des Gassackes bereitgestellt wird.

Gemäß einer bevorzugten Ausgestaltung der vorliegenden Erfindung enthalten die Steuereinrichtungen das nach der Sensorauslösung in Bewegung versetzte Bauteil, das derart ausgebildet und angeordnet ist, daß es nach der Sensorauslösung zunächst durch den wenigstens überwiegenden Teil des vom Gasgenerator erzeugten Gasdruckes beaufschlagt wird und letzteren erst nach einem vorgebbaren Bewegungsweg oder nach einer vorgebbaren Bewegungsdauer vollständig zum Aufblasen des Gassackes entläßt. Diese Bauart ist besonders rationell, weil das bereits vorhandene Bauteil zum öffnenden Antrieb der Abdeckeinrichtung geschickt gleichzeitig zum Steuern des Öffnens der Abdeckeinrichtung und zum Aufblasen des Airbags verwendet wird. Besonders vorteilhaft ist dabei auch, daß automatisch ohne gesonderten Aufwand ein optimaler Zeitablauf des Öffnens der Abdeckeinrichtung und des Aufblasens des Airbags erreicht werden kann.

Bei einer mit Vorzug angewandten Fortbildung der vorstehenden Ausführung ist vorgesehen, daß das nach der Sensorauslösung in Bewegung versetzte Bauteil bezüglich des Gasgenerators derart ausgestaltet und verschiebbar ist, daß es nach der Sensorauslösung den wenigstens überwiegenden Teil des vom Gasgenerator erzeugten Gasdruckes aufnimmt, bis die Austrittsöffnung für den Gassack für wenigstens annähernd ungehindertes Vorschieben des letzteren in den Fahrgastraum des Fahrzeugs ausreichend geöffnet ist. Diese Ausgestaltung hat den Vorteil, daß automatisch ohne gesonderten Aufwand ein optimaler Zeitablauf des Öffnens der Abdeckeinrichtung und des Aufblasens des Airbags erreicht wird.

Eine besonders einfache und in vorteilhafter Weise gleichzeitig äußerst effektive und genaue Airbagvorrichtung kann erhalten werden, wenn das nach der Sensorauslösung in Bewegung versetzte Bauteil zur Betätigung der Abdeckeinrichtung eine verstellbare Kappe oder Wanne enthält, die den Gasgenerator im Bereich von Gasauslaßöffnungen zur Aufnahme des Gasdruckes aus dem Gasgenerator über ihren Verstellweg solange zumindest im wesentlichen dicht umgibt, bis die Austrittsöffnung für den Gassack für wenigstens annähernd ungehindertes Vorschieben des letzteren in den Fahrgastraum des Fahrzeugs ausreichend geöffnet ist, und den Gasdruck dann vollständig zum Aufblasen des Gassackes entläßt. Diese Ausgestaltung kommt ohne jegliche elektrische und/oder elektronische und selbst kompliziertere mechanische Steuerungen aus, um das Öffnen der Abdeckeinrichtung und anschließend das Aufblasen und Vorschieben des Gassackes in den Fahrzeuginnenraum mit äußerster Präzision ablaufen zu lassen.

Besonders bevorzugt läßt sich die vorliegende Erfindung bei einer Airbagvorrichtung anwenden, bei der zusätzlich zum ersten Gasgenerator wenigstens ein weiterer Gasgenerator und/oder bei der in dem Gasgenerator mehrere Gasgeneratorstufen vorgesehen sind, die nacheinander auslösbar sind. Dann ist es von Vorteil, wenn die Steuereinrichtungen derart ausgelegt sind, daß Gasdruck zum Bewegen des Bauteils nur vom ersten Gasgenerator oder von der ersten Gasgeneratorstufe des Gasgenerators bereitgestellt wird.

Das Verfahren zum Auslösen einer Airbagvorrichtung beispielsweise in einem Fahrzeug zeichnet sich dadurch aus, daß in Folge einer Sensorauslösung zunächst eine Abdeckeinrichtung von einem nach der Sensorauslösung in Bewegung versetzten Bauteil der Airbagvorrichtung zur Freigabe einer Austrittsöffnung für einen Gassack angetrieben wird, so daß sie sich dabei im wesentlichen innerhalb einer Außenkontur der Airbagvorrichtung oder eines die Airbagvorrichtung enthaltenden Fahrzeugteils bewegt, und dann eine Gassackeinrichtung durch einen Gasgenerator zum Vorschieben in einen Fahrgastraum des Fahrzeugs mit Treibgas aufgeblasen wird.

Eine vorteilhafte und daher bevorzugte Weiterbildung davon besteht darin, daß der vom Gasgenerator erzeugte Gasdruck nach der Sensorauslösung zunächst wenigstens überwiegend zum Antrieb des Bauteils und erst nach einem vorgebbaren Bewegungsweg oder nach einer vorgebbaren Bewegungsdauer des Bauteils vollständig zum Aufblasen des Gassackes bereitgestellt wird.

Auch bei dem Verfahren sollen, wie bei der weiter oben angegebenen Vorrichtung, vorzugsweise im wesentlichen nur Leckageverluste den Gasdruck zum Öffnen der Abdeckeinrichtung verringern können.

Analog zu den weiter vorne behandelten Vorrichtungsausgestaltungen ergeben sich auch weitere verfahrensmäßige Abläufe und deren Abwandlungen sowie die diesbezüglichen Vorteile.

Noch andere vorteilhafte und bevorzugte Weiterbildungen sowie deren Vorteile ergeben sich aus den jeweils abhängigen Ansprüchen und deren Kombinationen.

Nachfolgend wird die Erfindung anhand von Ausführungsbeispielen unter Bezugnahme auf Zeichnungen näher erläutert. Es zeigen:
Fig. 1: in einer seitlichen Querschnittsansicht eine obere Hälfte einer ersten Ausführung einer Airbagvorrichtung gemäß der Erfindung in einer Anfangs- oder Bereitschaftsstellung;
Fig. 2: in einer seitlichen Querschnittsansicht die untere Hälfte der in Fig. 1 dargestellten ersten Ausführung der Airbagvorrichtung nach Auslösen eines Gasgenerators in einer Bewegungsendstellung;
Fig. 3A: eine schnittbildliche Darstellung einer zweiten Ausführung für einen Antrieb zum Zurückziehen der Abdeckeinrichtung;
Fig. 3B: eine Draufsicht auf die zweite Ausführungsform der Fig. 3A;
Fig. 4A: eine dritte Ausführungsform für einen Antrieb zum Zurückziehen der Abdeckeinrichtung;
Fig. 4B: eine schnittbildliche Darstellung der dritten Ausführungsform der Fig. 4A entlang der Schnittlinie IV-IV in der Fig. 4A;
Fig. 5A: ein viertes Ausführungsbeispiel für einen Antrieb zum Zurückziehen der Abdeckeinrichtung in Seitenansicht;
Fig. 5B: eine Draufsicht auf die vierte Ausführungsform der Fig. 5A;
Fig. 6: eine fünfte Ausführungsform für einen Antrieb zum Zurückziehen der Abdeckeinrichtung in Seitenansicht;
Fig. 7: ein Ausführungsbeispiel für eine Abdeckklappe der Abdeckeinrichtung, welche eine für ein Zurückziehen in das Airbagmodul geeignete Bauform aufweist;
Fig. 8A und 8B: jeweils ein schematischer Längsschnitt durch eine sechste Ausführung der Airbagvorrichtung mit einem Antrieb zum Zurückziehen der Abdeckeinrichtung vor dem Zurückziehen der Abdeckeinrichtung (8A) und nach dem Zurückziehen der Abdeckeinrichtung (8B);
Fig. 9A und 9B: entsprechend jeweils eine schematische Front- und Seitenansicht eines Bauteils zum Antrieb der Abdeckeinrichtung bei der Ausführung der Airbagvorrichtung nach den Fig. 8A und 8B;
Fig. 10A und Fig. 10B: schematisch einen Längsschnitt durch eine siebte Ausführung der Airbagvorrichtung mit einem Antrieb zum Zurückziehen der Abdeckeinrichtung vor dem Zurückziehen der Abdeckeinrichtung (9A) und nach dem Zurückziehen der Abdeckeinrichtung (9B); und
Fig. 11: eine achte Ausführungsform der Airbagvorrichtung mit einem Antrieb zum Zurückziehen der Abdeckeinrichtung mit einem mehrstufigen Gasgenerator in einem schematischen Längsschnitt.

In der Zeichnung sind durch alle Figuren hindurch gleiche oder ähnliche öder gleich oder ähnlich wirkende Teile oder Kombinationen durchgehend mit denselben Bezugszeichen versehen, so daß sich diese Teile oder Kombinationen sowie deren Funktionen dem Fachmann auch bei solchen Darstellungen ohne weiteres erschließen, für die nicht alle solchen Teile oder Kombinationen sowie deren Funktionen im einzelnen beschrieben sind. Ferner kann der Fachmann den einzelnen Abbildungen und Darstellungen der Zeichnung und insbesondere auch durch die vergleichende Betrachtung verschiedener Figuren weitere Einzelheiten entnehmen, ohne daß diese gesondert bezeichnet und/oder beschrieben sind.

Die hier allgemein betroffene Airbagvorrichtung kann sich z.B. auf der Beifahrerseite im Armaturenbrett vor dem Beifahrersitz des Kraftfahrzeugs befinden, ist jedoch nicht auf diesen Anwendungsfall beschränkt.

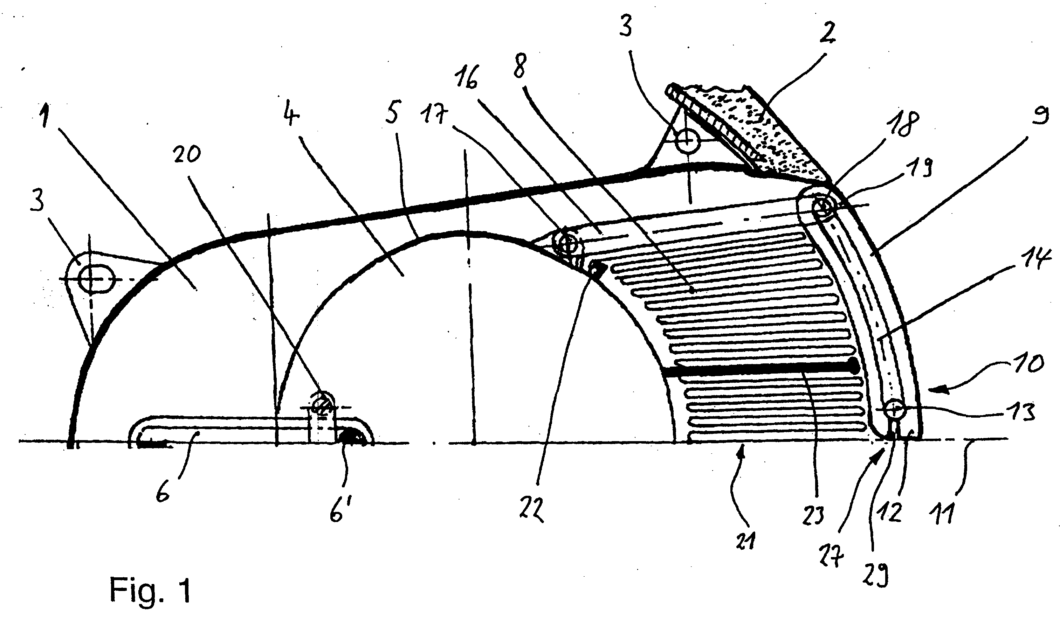

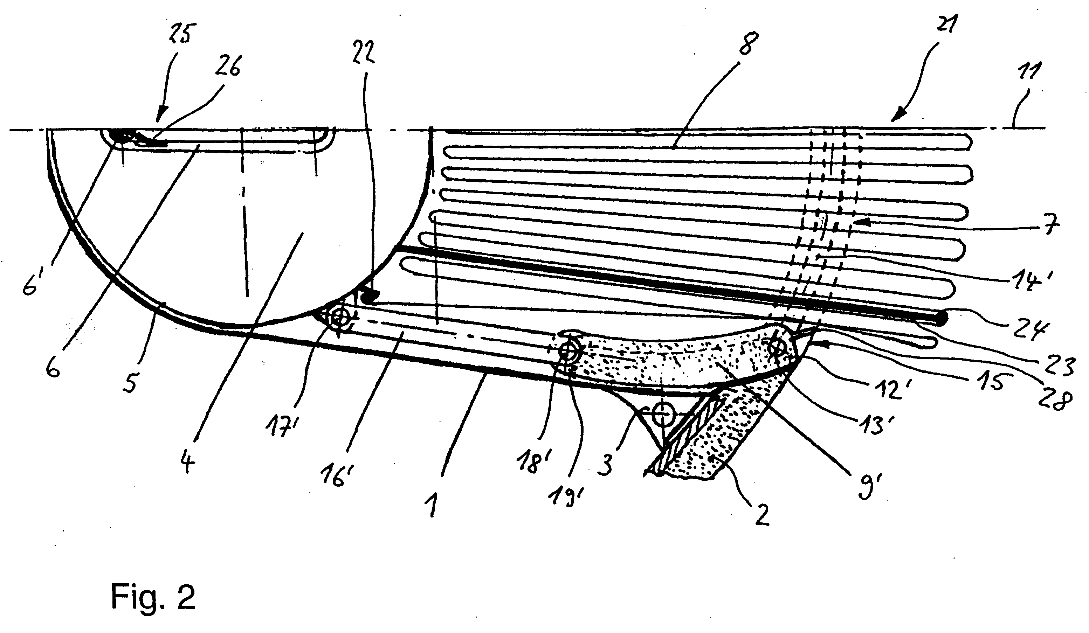

Eine erfindungsgemäße Airbagvorrichtung weist ein Gehäuse 1 auf, das in einer Armaturentafel 2 oder einer Innenverkleidung vor einem Beifahrersitz im Fahrgastraum eines Kraftfahrzeugs untergebracht und mittels Befestigungslaschen 3 oder dergleichen befestigt ist. Ein Gasgenerator 4 von grundsätzlich bekannter Bauart (wie z.B. in der DE 40 22 881 C2, der EP 0 627 342 A1), der auch als Hybridgenerator gemäß der EP 0 607 671 A1 ausgebildet sein kann, mit beispielsweise zylindrischem Gasgeneratorgehäuse 5 ist in der Airbagvorrichtung enthalten und mittels einer schematisch dargestellten Längsführung 6, die z.B. als Kulissenführung ausgebildet ist und in die ein Zapfen 6' des Gasgeneratorgehäuses 5 eingreift, verschiebbar gelagert, so daß er von einer vorderen Anfangs-, Ruhe- oder Bereitschaftsstellung (siehe Fig. 1 ) in einer zentralen Anordnung in der Airbagvorrichtung in eine hintere Bewegungsendstellung nach Auslösen und Verschieben (aus der Stellung in Fig. 1 nach links in die Stellung der Fig. 2) durch den Treibgasdruck geführt ist.

Eine dem Fahrgastraum bzw. einer zu schützenden Person zugewandte Öffnung 7 der Airbagvorrichtung (siehe Fig. 2) für den Austritt eines Gassackes 8 ist von einer oberen und einer unteren Abdeckklappe 9 bzw. 9' einer Abdeckeinrichtung 10 in der Bereitschafts- oder Ruhestellung verschlossen (siehe Fig. 1). Die Abdeckklappen 9, 9' grenzen mit ihrem jeweiligen, einer zentralen Mittelebene 11 der Airbagvorrichtung zugewandten Randbereich 12, 12' aneinander. An diesen Randbereichen 12, 12' enthalten die Abdeckklappe 9, 9' jeweils Stifte 13 bzw. 13', die auf beiden Seiten der Abdeckklappen 9, 9' von diesen hervorstehen (senkrecht zur Bildebene der Fig. 1 ) und in Aussparungen wie Schlitze oder Nuten 14, 14' im Gehäuse 1 der Airbagvorrichtung eingreifen. Die Nuten 14, 14' bilden beidseitige Führungen für die Stifte 13, 13' und können gerade oder kurvenförmig verlaufen. Im Ausführungsbeispiel sind die Nuten 14, 14' der gebogenen Querschnittsform der Abdeckklappen 9, 9' angepaßt und verlaufen damit entlang der Außenkontur 15 der Innenverkleidung bzw. der Armaturentafel 2.

Eine gelenkige Verbindung in Form von einer jeweiligen Stange 16 bzw. 16' ist zwischen dem Gasgenerator 4 und jeder Abdeckklappe 9, 9' vorgesehen, wobei jede Stange 16, 16' einerseits über ein Gelenk 17, 17' an dem Gehäuse 5 des Gasgenerators 4 und andererseits über ein Gelenk 18, 18' an dem anderen, von der Mittelebene 11 entfernten Randbereich 19, 19' der Abdeckklappen 9, 9', der oben bzw. unten an der Innenverkleidung 2 anliegt, angelenkt ist und somit eine gelenkige Hebelverbindung zwischen dem Gasgenerator 4 und den Abdeckklappen 9, 9' bildet. Die Stangen 16, 16' halten die oberen bzw. unteren Randbereiche 19, 19' der Abdeckklappen 9, 9' in ihrer Position an der Innenverkleidung 2 und somit die Abdeckklappen 9, 9' bündig mit der Außenkontur 15, während der Gasgenerator 4 in seiner Ruhe- oder Bereitschaftsstellung durch eine Blechspange 20 im Bereich der Längsführung 6 gesichert ist, die sich beim Druckaufbau durch das Treibgas wegdreht und die Bewegung des Gasgenerators 4 zuläßt. Alternativ können Kunststoffzapfen oder dergleichen am Gasgenerator 4 oder an den Abdeckklappen 9, 9' vorgesehen sein, die zur Bewegungshemmung in ein Gegenstück eingreifen und nach Zündung des Gasgenerators 4 abgeschert oder abgebrochen werden und somit eine Bewegung der Abdeckklappen 9, 9' und des Gasgenerators 4 zulassen.

Eine Gassackeinrichtung 21 der Airbagvorrichtung enthält einen Airbag oder Gassack 8, dessen Sackrand 22 an dem Gehäuse 5 des Gasgenerators 4 befestigt ist und der in gefaltetem Zustand in dem Raum zwischen dem Gasgenerator 4 und den Abdeckklappen 9,9' untergebracht ist. Die beiden Stangen 16, 16' können auch als plattenförmige Teile gebildet sein, die eine obere und eine untere Begrenzung dieses Raumes darstellen und zusammen mit den durch das Gehäuse 1 des Airbagvorrichtung gebildeten seitlichen Begrenzungen einen Schußkanal für den Gassack 8 bilden. Ein Seil 23 ist als Zündauslöser an dem vorschiebbaren Gewebe 24 des Gassackes 8 befestigt und mit einer Zündeinrichtung (nicht dargestellt) für eine zweite Antriebsstufe des Gasgenerators 4 verbunden.

Wenn durch einen nicht näher dargestellten, insbesondere fahrsituationssensitiven Sensor eine überhöhte Fahrzeuggeschwindigkeitsänderung festgestellt wird, wird durch eine Sensorauslösung in bekannter Weise eine Zündladung und anschließend eine Treibgasladung des Gasgenerators 4 gezündet. Das Treibgas tritt durch aufreißbare Öffnungen (nicht dargestellt) im Gehäuse 5 des Gasgenerators 4 innerhalb des Sackrandes 22 zum Gassack 8 hin aus, der dadurch aufgeblasen wird und sich entfalten möchte. Der Gassack 8 drückt gegen die noch geschlossenen Abdeckklappen 9, 9', wodurch eine Reaktionskraft in entgegengesetzter Richtung auf den Gasgenerator 4 wirkt und diesen aus seiner Verankerung 20 löst und in seiner Führung 6 in der Figur nach links bewegt. Diese Bewegung des Gasgenerators 4 wird auch durch eine Rückstoßkraft des aus dem Gasgenerators 4 ausströmenden Treibgases unterstützt. Der sich bewegende Gasgenerator 4 zieht über die zwei Stangen 16, 16' die beiden Abdeckklappen 9, 9' an ihrem oberen bzw. unteren Rand 19, 19' nach innen in etwa entlang der Innenseite des Gehäuses 1 der Airbagvorrichtung. Dabei bewegen sich die inneren Randbereiche 12, 12' der beiden Abdeckklappen 9, 9' durch die Stifte 13, 13' geführt auf den Kurvenverläufen der Führungen oder Nuten 14,14' an der Öffnung 7 bis in die Endstellung (Fig. 2), in der die Abdeckklappen 9, 9' gänzlich in die Airbagvorrichtung hineingezogen sind und somit die Öffnung 7 für den Austritt des Gassackes 8 freigegeben haben. Der Gassack 8 kann sich vollständig durch die Öffnung 7 hindurch in den Fahrgastraum ausbreiten. Durch eine Blockiereinrichtung 25 ist der Gasgenerator 4 in seiner Bewegungsendstellung gemäß Fig. 2 gesichert, so daß er aufgrund seiner Bewegungsenergie nicht hin- und her springen kann. Die Blockiereinrichtung 25 kann eine vorgespannte Blattfeder 26 aufweisen, die in der Führungsbahn 6 derart eingelassen ist, daß der Zapfen 6' sich in der Führung 6 über die niederdrückbare Blattfeder 26 hinwegbewegen kann, die sich anschließend aufgrund ihrer Vorspannung aufstellt und eine Rückbewegung verhindert.

Die beiden Abdeckklappen 9,9' können eine Kopplungseinrichtung 27 aufweisen, die die Abdeckklappen 9, 9' in der geschlossenen Ruhestellung an ihren beiden aneinander grenzenden Randbereichen 12, 12' in einer sicheren Verbindung hält. Diese Kopplungseinrichtung 27 enthält z.B. eine vorspringende Nase oder einen Stift 28 an dem einen Randbereich 12' der Abdeckklappe 9', der in eine zugeordnete Ausnehmung 29 an dem anderen Randbereich 12 der oberen Abdeckklappe 9 eingreifen kann.

Die beschriebene Airbagvornchturig kann sich z.B. auf der Beifahrerseite im Armaturenbrett vor dem Beifahrersitz des Kraftfahrzeugs befinden, ist jedoch nicht auf diesen Anwendungsfall beschränkt.

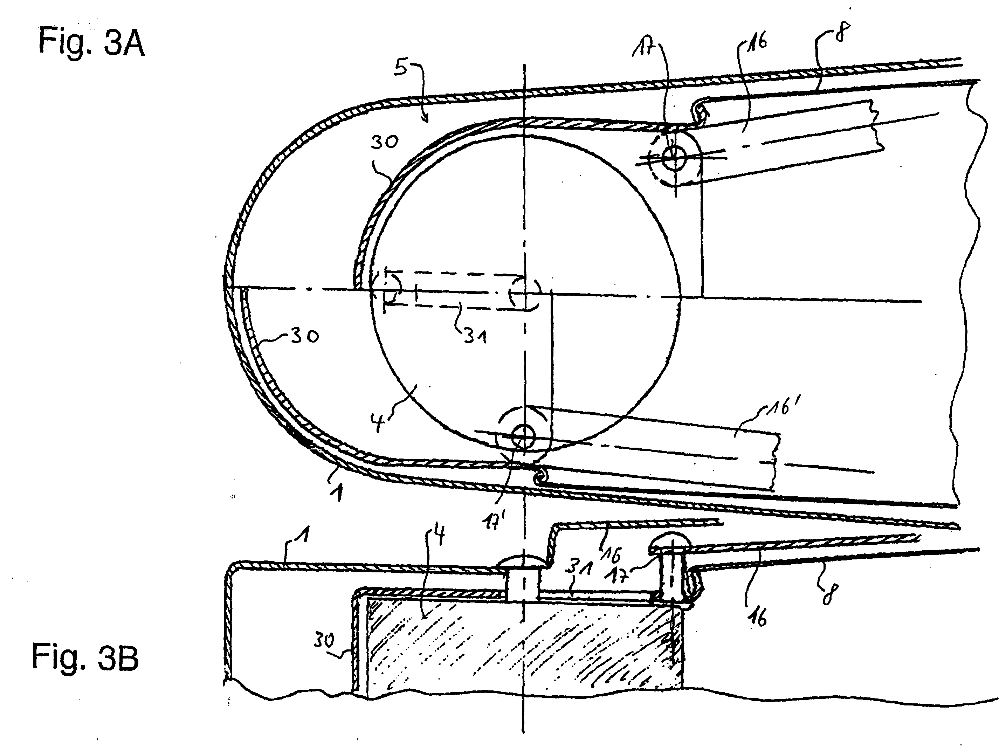

In den Figuren 3A und 3B ist eine Ausführungsform für eine Antriebseinrichtung gezeigt, mit welcher die Abdeckeinrichtung, insbesondere zwei Abdeckklappen, in das Gehäuse 1 des Airbagmoduls zurückgezogen werden können. In der oberen Hälfte der Fig. 3A ist die Antriebseinrichtung in der Ruheposition und in der unteren Hälfte in der zurückgezogenen Position dargestellt. Der Gasgenerator 4 ist bei dieser Ausführungsform ortsfest im Gehäuse 1 angeordnet. Zwischen dem Gasgenerator 4 und dem Gehäuse 1 ist in Rückzugsrichtung ein Freiraum vorgesehen, in den eine den Gasgenerator 4 teilweise, insbesondere halbschalig umgebende Hülle 30 als antreibbares Bauteil 5 bewegbar ist. Die Hülle 30 ist mit den nicht näher dargestellten Abdeckklappen der Abdeckeinrichtung über die Stangen 16 und 16' verbunden. Die Hülle 30 kann durch den Gasdruck des zum Füllen des Gassackes 8 verwendeten Füllgases, das vom Gasgenerator 4 erzeugt wird, in die zurückgezogenen Position angetrieben werden. Für eine lineare Führung der Hülle 30 können in Form von Schlitzen 31 Führungen vorgesehen sein. Hierdurch wird eine geradlinige Führung der Hülle 30 gegenüber dem ortsfesten Generator 4 erzielt. In der zurückgezogenen Position wird die Hülle 30 durch eine nicht näher dargestellte Blockiereinrichtung blockiert. Mit der Hülle 30 kann der Gassack 8 verbunden sein. Auf diese Weise werden von einer Trägereinrichtung sowohl die beim Zurückziehen der Abdeckeinrichtung als auch beim Ausstoßen des Gassackes 8 aus der Austrittsöffnung auftretenden Reaktionskräfte von einer einzigen Trägereinrichtung aufgenommen, wobei diese einander entgegengerichteten Reaktionskräfte sich ganz oder teilweise kompensieren. Ferner werden bei diesem Ausführungsbeispiel nur geringe Massen bewegt, so daß eine kurze Reaktionszeit erzielt wird.

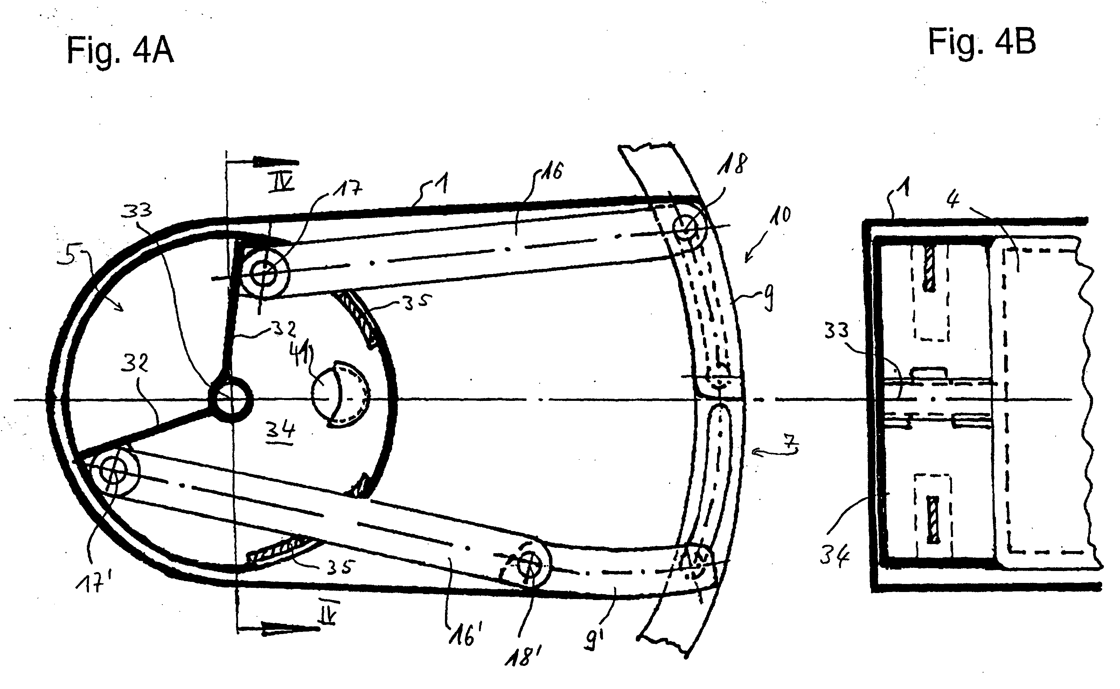

Bei dem in den Figuren 4A und 4B dargestellten Ausführungsbeispiel wird das bewegbare Bauteil 5 von einem oder mehreren Drehflügeln 32 (Drehkolben) gebildet. Bei dem in den Figuren dargestellten Ausführungsbeispiel befinden sich an beiden Seiten des Gasgenerators 4 Druckkammern 34, in denen zwei Drehflügel 32 um eine Dreh- oder Drehflügelachse 33 gelagert sind. Die beiden Drehflügel (Kolbenflügel) sind in der Mitte der jeweiligen zylindrischen Druckkammer 34 auf der gemeinsamen Drehflügelachse 33 wie in einem doppelten Scharnier gelagert. Die Enden der Drehflügel 32 sind über die Stangen 16, 16' und die Gelenke 17, 17' sowie 18, 18' mit den Abdeckklappen 9, 9' der Abdeckeinrichtung 10 verbunden.

In jedem der beiden Druckräume 34 ist eine Gasdurchlaßöffnung 41 vorgesehen. Durch diese Öffnung kann vom Gasgenerator 4 erzeugtes Füllgas in die Druckräume 34 zum Drehantrieb der Drehflügel 32 eingeleitet werden. Durch das eingeleitete Druckgas werden die beiden Drehflügel 32 aus ihrer Ruheposition, welche in der oberen Hälfte der Fig. 4A dargestellt ist, in die zurückgezogene Position, welche in der unteren Hälfte 4A dargestellt ist, um die gemeinsame Drehflügelachse 33 gedreht. Dabei werden die Abdeckplatten 9 und 9' zur Freigabe der Austrittsöffnung 7 in eine seitliche Position gebracht, welche in der Fig. 4A in der unteren Hälfte dargestellt ist. Diese seitliche Position befindet sich neben dem Unterbringungsraum, in welchem der Gassack im Normalzustand untergebracht ist.

An den Stangen 16, 16' können Abdeckplatten 35 vorgesehen sein zum druckdichten Abdecken der Stangendurchführungen.

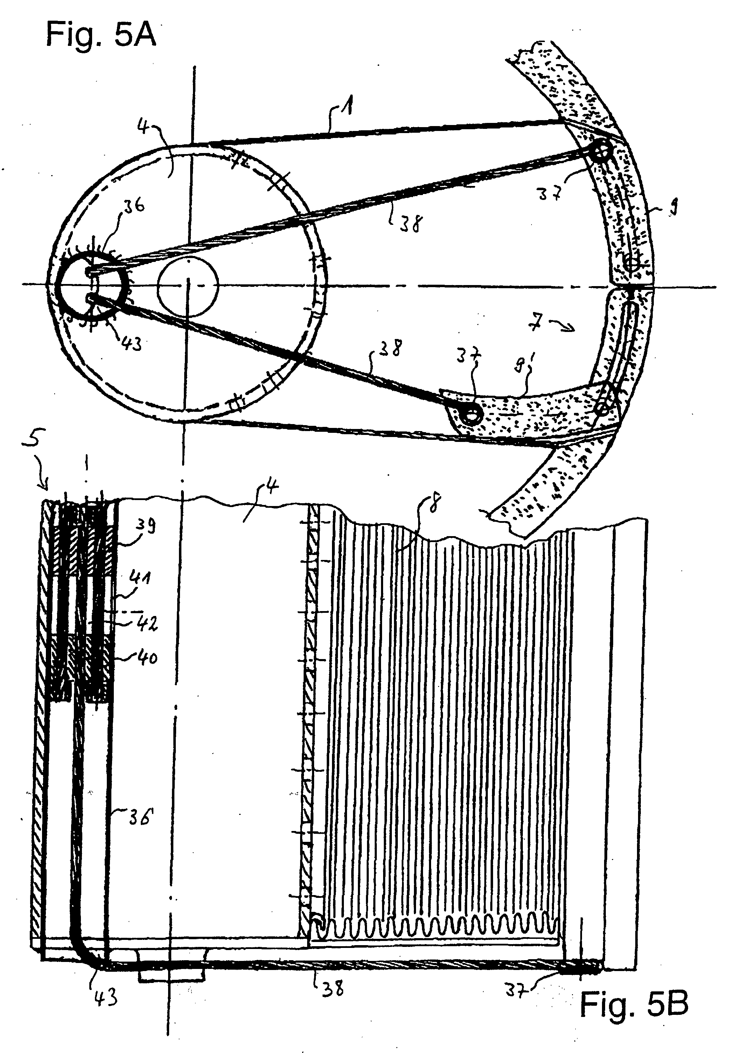

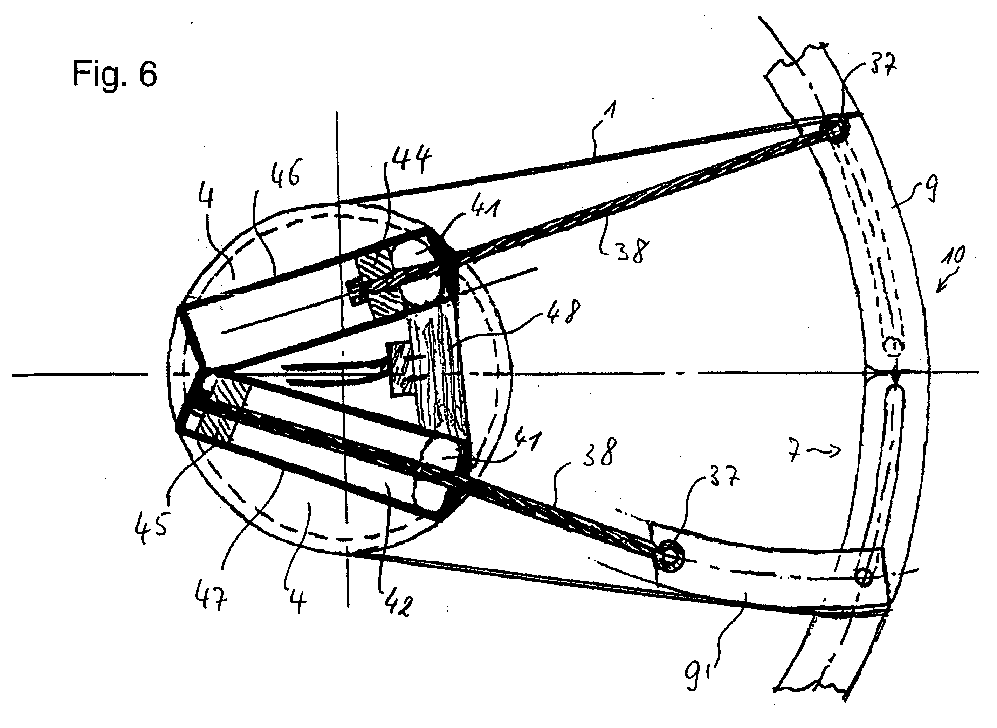

In den Figuren 5A, 5B und 6 sind Ausführungsbeispiele für einen Antrieb der Abdeckeinrichtung in Form von Linear-Kolbenzylindernanordnungen dargestellt. Bei dem in den Figuren 5A und 5B dargestellten Ausführungsbeispiel wird das für die Freigabe der Austrittsöffnung 7 angetriebene Bauteil 5 von einer Kolbenzylinderanordnung gebildet, welche einen Führungszylinder 36 aufweist, in welchem zwei gegenläufig antreibbare Kolben 39 und 40 geführt sind. Der Führungszylinder 36 verläuft parallel zur Achse des Gasgenerators 4. An beiden Enden des Führungszylinders 36 sind Zugseile 38 herausgeführt, welche mit den Abdeckklappen 9, 9' der Abdeckeinrichtung 10 an den Verbindungsstellen 37 verbunden sind. Der Führungszylinder 36 kann im Innern des Gasgeneratorgehäuses angeordnet sein. An den Rückseiten der beiden Kolben 39 und 40 ist ein Druckraum 42 gebildet. In diesen Druckraum 42 wird für den Linearantrieb der Kolben ein Druckgas eingeleitet. Dieses Druckgas kann bereitgestellt werden in Form des Füllgases, welches der Gasgenerator 4 erzeugt. Über die Gasdurchlaßöffnung 41 kann dieses vom Gasgenerator 4 erzeugte Gas in den Druckraum 42 geleitet werden. Mit den jeweiligen Kolben 39 und 40 können ein oder mehrere Zugseile 38 verbunden sein. Die Zugseile des Kolbens 39 sind durch entsprechende Durchbrüche im Kolben 40 und die Zugseile des Kolbens 40 sind durch entsprechende Durchbrüche im Kolben 39 hindurchgeführt. An den beiden Zylinderenden können Umlenkflächen 43 zum Umlenken der Zugseile 38 vorgesehen sein. In der oberen Hälfte der Fig. 5A ist die Ruheposition der Abdeckeinrichtung und in der unteren Hälfte die zurückgezogene Position der Abdeckeinrichtung dargestellt. In der zurückgezogenen Position befindet sich die Abdeckeinrichtung seitlich an der Wand des Modulgehäuses 1.

Anstelle des vom Gasgenerator 4 erzeugten Druckgases kann in den Druckraum 42 auch ein Druckgas eingeleitet werden, welches von einer separaten Energiequelle, insbesondere Gasgenerator, erzeugt wird. Gegebenenfalls kann durch das im Druckraum 42 entstehende Druckgas die Zündung (Druckzündung) des Gasgenerators 4 veranlaßt werden. Hierdurch wird gewährleistet, daß die Freigabe der Austrittsöffnung 7 vor Beginn des Füllens des Gassackes 8 eingeleitet wird. Bei dem in der Fig. 6 dargestellten Ausführungsbeispiel sind Kolben 44 und 45 in separaten Zylindern 46 und 47 angeordnet. An jeder Stirnseite des Gasgenerators 4 sind zwei Kolbenzylinderanordnungen vorgesehen. Die Führungsrichtungen der Kolben 44 und 45 in den Zylindern 46 und 47 entsprechen den geradlinigen Verbindungslinien der Kolben mit den Verbindungsstellen 37 an den Abdeckklappen 9, 9' der Abdeckeinrichtung. In der oberen Hälfte der Fig. 6 ist die Ruheposition und in der unteren Hälfte der Fig. 6 die zurückgezogene Position der Anordnung dargestellt.

In die Druckräume 42 wird das für den Antrieb der Kolben 44 und 45 benötigte Gas eingeleitet. Hierbei kann es sich um das vom Gasgenerator 4 erzeugte Füllgas handeln, wobei über die Gasdurchlaßöffnungen 41 die entsprechende Verbindung zu den Druckräumen 42 hergestellt wird.

Es ist jedoch auch möglich, eine separate Gasquelle 48 für den Kolbenantrieb vorzusehen. Dabei kann diese Gasquelle, welche elektrisch zündbar sein kann, die Zündung (Druckzündung) des Gasgenerators 4 für die Befüllung des Gassackes 8 bewirken.

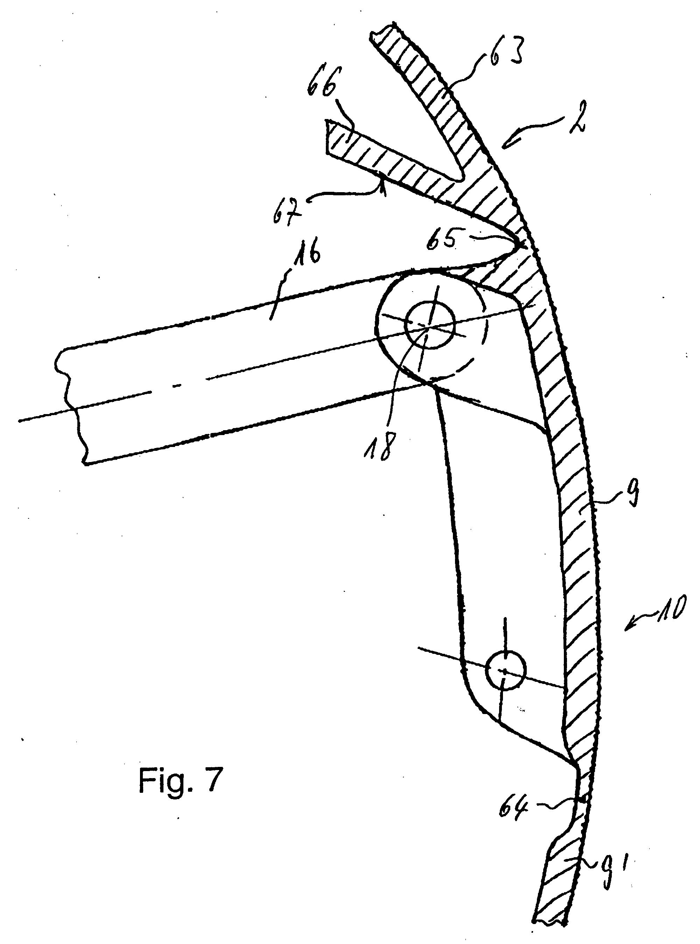

In der Fig. 7 ist ein Ausführungsbeispiel für eine Hartkunststoffarmaturentafel mit Abdeckeinrichtungen 10 bzw. Abdeckklappen 9 gezeigt, welche einen für einen Rückzug in das Airbagmodul geeigneten Aufbau aufweisen. Durch die gezeigte Ausführungsform erreicht man eine Armaturentafel, an deren Äußerem die Trennfugen zwischen der Abdeckeinrichtung und dem Armaturentafelkörper sowie zwischen den Abdeckklappen nicht sichtbar sind, wobei jedoch ein einwandfreies Trennen der Abdeckeinrichtung beim Zurückziehen vom Armaturentafelkörper gewährleistet ist.

Die Hartkunststoffarmaturentafel besteht beispielsweise aus Polypropylen. Der Armarturentafelkörper 63 sowie die Abdeckklappen 9, 9' der Abdeckeinrichtung 10 sind aus einem Stück, insbesondere durch Spritzguß hergestellt. An den Trennstellen, an denen die Abdeckeinrichtung 10 beim Zurückziehen vom Armaturentafelkörper 63 abgetrennt wird, sind durch Materialverdünnungen Sollbruchstellen 65 geschaffen. Ferner sind Sollbruchstellen 64 zwischen den Abdeckklappen 9 und 9' geschaffen. An den Sollbruchstellen 64 und 65 können zusätzliche Einschnitte in Zickzackform, beispielsweise durch Laserstrahl, eingebracht sein. Mit Hilfe der schon beschriebenen Antriebseinrichtungen können zum Freilegen der Austrittsöffnung die Abdeckklappen zurückgezogen werden. Bei den dargestellten Ausführungsbeispielen sind an den Armaturentafelträgern 66 bevorzugt schräge Führungsflächen 67 für die Abdeckplatten 9 bzw. 9' beim Zurückziehen in das Innere der Armaturentafel bzw. des Airbagmoduls vorgesehen.

In bevorzugter Weise kann die Airbageinrichtung in der Weise ausgebildet sein, daß die Reaktionskräfte, welche beim Ausstoßen des Gassackes aus dem Airbagmodul auftreten, den Reaktionskräften entgegengerichtet sind, welche beim Zurückziehen der Abdeckeinrichtung, insbesondere Abdeckklappen, auftreten. Diese einander entgegengerichtet wirkenden Kräfte können von einer gemeinsamen Trägereinrichtung aufgenommen werden. Auf diese Weise läßt sich eine Kompensation der angreifenden Reaktionskräfte ganz oder teilweise erzielen.

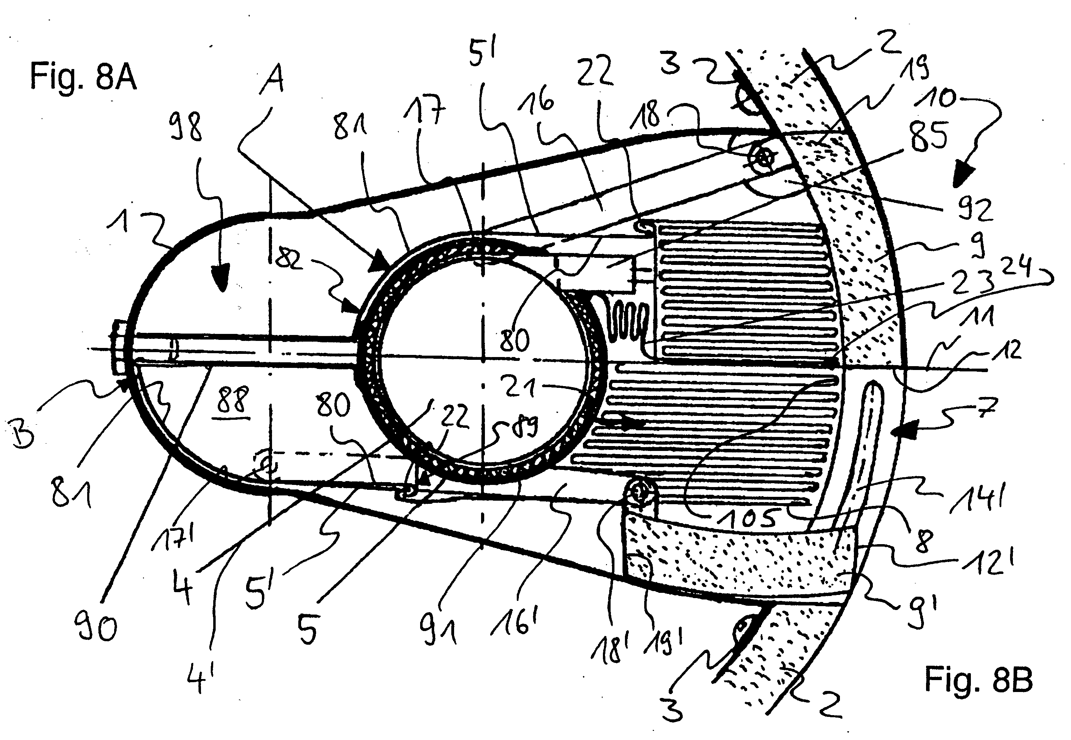

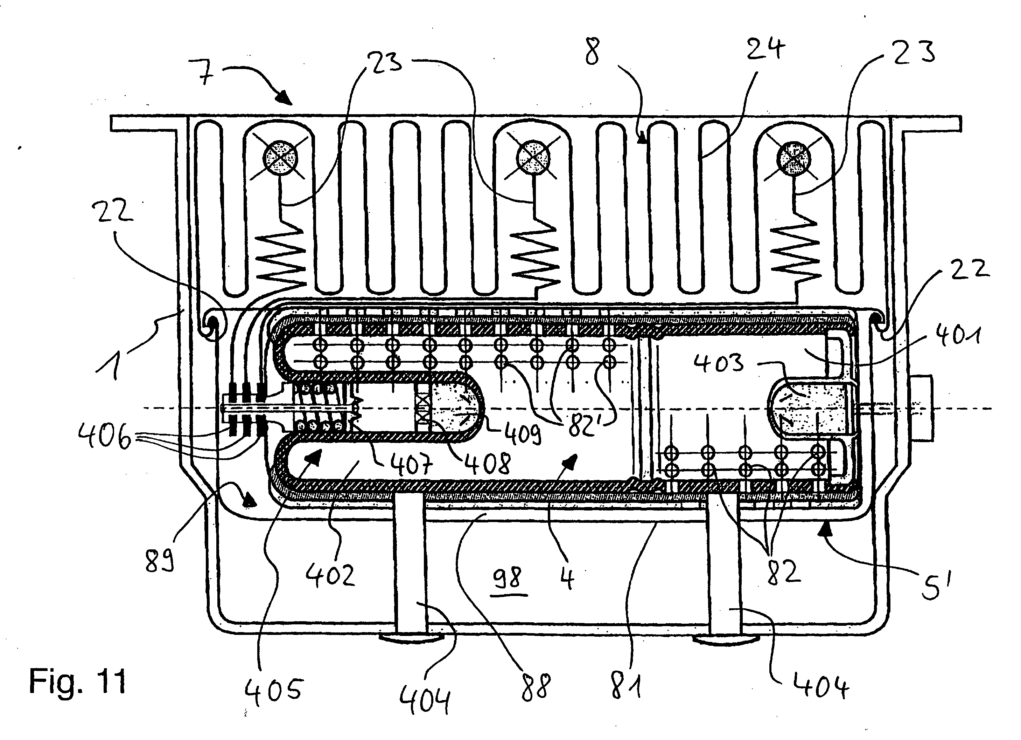

Eine erfindungsgemäße Airbagvorrichtung, wie sie prinzipiell in den Fig. 8A, und 8B in einer sechsten Ausführungen gezeigt ist, weist ein Gehäuse 1 auf, das z.B. in einer Armaturentafel 2 oder einer Innenverkleidung vor einem Beifahrersitz (nicht gezeigt) im Fahrgastraum (nicht gezeigt) eines Kraftfahrzeuges (nicht gezeigt) untergebracht und mittels Befestigungslaschen 3 oder dergleichen befestigt ist. Ein Gasgenerator 4 sowie ggf. ein zweiter Gasgenerator 4' für beispielsweise eine zweistufige Auslösung der Airbagvorrichtung von grundsätzlich bekannter Bauart (wie z.B. in der DE 40 22 881 C2, oder der EP 0 627 342 A1 beschrieben ist), wobei die zwei- oder mehrstufige Auslösung auch durch einen zwei- oder mehrstufigen Gasgenerator realisiert sein kann (siehe später zu Fig. 11), der auch als Hybridgenerator gemäß der EP 0 607 671 A1 ausgebildet sein kann, mit beispielsweise zylindrischem Gasgeneratorgehäuse 5, ist in der Airbagvorrichtung ortsfest angebracht.

Eine dem Fahrgastraum bzw. einer Person zugewandte Öffnung 7 der Airbagvorrichtung für den Austritt eines Gassackes 8 ist von einer oberen und einer unteren Abdeckklappe 9 bzw. 9' einer Abdeckeinrichtung 10 in der Bereitschafts- oder Ruhestellung verschlossen (siehe z.B. Fig. 8A). Die Abdeckklappen 9, 9' grenzen mit ihrem jeweiligen, einer zentralen Mittelebene 11 der Airbagvorrichtung zugewandten Randbereich 12, 12' aneinander. An diesen Randbereichen 12, 12' sind jeder Abdeckklappe 9, 9' beispielsweise Stifte 13 bzw. 13' zugeordnet, die auf beiden Seiten der Abdeckklappen 9, 9' bezüglich diesen hervorstehen und in Aussparungen wie Schlitze oder Nuten 14, 14' im Gehäuse 1 der Airbagvorrichtung eingreifen. Die Nuten 14, 14' bilden beidseitige Führungen für die Stifte 13, 13' und können gerade oder kurvenförmig verlaufen. Die Nuten 14, 14' können der gebogenen Querschnittsform der Abdeckklappen 9, 9' angepaßt sein, und damit sie parallel zur Außenkontur 15 der Innenverkleidung bzw. der Armaturentafel 2 verlaufen. Die Stifte 13, 13' können z.B. aber auch an den Abdeckklappen 9, 9' direkt angeordnet sein, wie sich indirekt aus der Fig. 8B ergibt, in der deutlich die Nut 14' für den Stift 13' in Folge der geöffneten Abdeckklappe 9' sichtbar ist.

Eine gelenkige Verbindung, die beispielsweise jeweils eine Stange 16 bzw. 16' enthalten kann, kann zwischen dem Gasgenerator 4 und jeder Abdeckklappe 9, 9' vorgesehen sein (Fig. 8A und 8B), wobei jede Stange 16, 16' einerseits über ein Gelenk 17, 17' an einem bezüglich des Gasgenerators 4 beweglichen, wie beispielsweise verschiebbaren Bauteils 5' und andererseits über ein Gelenk 18, 18' an dem anderen, von der Mittelebene 11 entfernten Randbeteich 19, 19' der Abdeckklappen 9, 9', der oben bzw. unten an der Innenverkleidung 2 anliegt, angelenkt ist und somit eine gelenkige Hebelverbindung zwischen dem Bauteil 5' und den Abdeckklappen 9, 9' bildet. Die Stangen 16, 16' halten die oberen bzw. unteren Randbereiche 19, 19' der Abdeckklappen 9, 9' in ihrer Position an der Innenverkleidung 2 und somit die Abdeckklappen 9, 9' bündig mit der Außenkontur 15, während das Bauteil 5' in seiner Ruhe- oder Bereitschaftsstellung A im Bereich seiner bevorzugt vorgesehenen Längsführung gesichert sein kann. Die Stangen 16, 16' können auch fest mit dem Bauteil 5', das später noch genauer beschrieben wird, verbunden sein, solange sie eine geeignete Führung der Abdeckklappen 9, 9' von deren Ruhe- oder Bereitschaftsstellung A in die geöffnete Position B sicherstellen.

Eine Gassackeinrichtung 21 der Airbagvorrichtung enthält einen Airbag oder Gassack 8, dessen Sackrand 22 an dem Bauteil 5' befestigt ist und der in gefaltetem Zustand in dem Raum zwischen dem Gasgenerator 4 und den Abdeckklappen 9, 9' untergebracht ist. Die beiden Stangen 16, 16' können auch als plattenförmige Teile gebildet sein, die eine obere und eine untere Begrenzung dieses Raumes darstellen und zusammen mit den durch das Gehäuse 1 des Airbagvorrichtung gebildeten seitlichen Begrenzungen einen Schußkanal für den Gassack 8 bilden. Ein Seil 23 ist als Zündauslöser an dem vorschiebbaren Gewebe 24 des Gassackes 8 befestigt und mit einer Zündeinrichtung 86 für eine zweite Antriebsstufe in Form des zweiten Gasgenerators 4' verbunden.

Wenn durch einen nicht näher dargestellten, insbesondere fahrsituationssensitiven Sensor eine überhöhte Fahrzeuggeschwindigkeitsänderung festgestellt wird, wird durch eine Sensorauslösung in bekannter Weise z.B. eine Zündladung eines beispielsweise elektrischen Zünders 85 und dadurch anschließend eine Treibgasladung des Gasgenerators 4 gezündet. Die Zündladung 85 kann, wie auch die Zündeinrichtung 86 des zweiten Gasgenerators 4', eine elektrisch auslösbare Zündladung oder eine mechanisch auslösbare Zündladung sein, wobei die mechanische Auslösung elektrisch aktivierbar sein kann. Bevorzugt ist es, wenn die Zündung 85 des ersten Gasgenerators 4 als erste Stufe elektrisch und die Zündung 86 des zweiten Gasgenerators 4' als zweite, später gezündete Stufe mechanisch ausgelöst werden.

Das Treibgas könnte durch aufreißbare Öffnungen (nicht dargestellt) im Gehäuse 5 des Gasgenerators 4 innerhalb des Sackrandes 22 zum Gassack 8 hin austreten, der dadurch aufgeblasen würde und sich entfalten möchte, wie auch gemäß anderen vorher beschriebenen Ausführungen vorgesehen sein kann. Der Gassack 8 würde dann gegen die noch geschlossenen Abdeckklappen 9, 9' (Position A) drücken, wodurch eine Reaktionskraft in entgegengesetzter Richtung auf den dann jedoch verschiebbar anzuordnenden Gasgenerator 4 wirkt und diesen und in einer Führung nach links bewegen würde (vgl. Fig. 8A). Eine solche Bewegung des Gasgenerators 4 würde auch durch eine Rückstoßkraft des aus dem Gasgenerators 4 ausströmenden Treibgases unterstützt. Ein sich so bewegender Gasgenerator 4 könnte über zwei Stangen 16, 16' die beiden Abdeckklappen 9, 9' an ihrem oberen bzw. unteren Rand 19, 19' nach innen in etwa entlang der Innenseite des Gehäuses 1 der Airbagvorrichtung ziehen. Dabei bewegten sich dann die inneren Randbereiche 12, 12' der beiden Abdeckklappen 9, 9' durch die Stifte 13, 13' geführt auf den Kurvenverläufen der Führungen oder Nuten 14, 14' an der Öffnung 7 bis in die Endstellung B (vgl. Fig. 8B), in der die Abdeckklappen 9, 9' gänzlich in die Airbagvorrichtung hineingezogen sind und somit die Öffnung 7 für den Austritt des Gassackes 8 freigegeben haben. Der Gassack 8 kann sich dann vollständig durch die Öffnung 7 hindurch in den Fahrgastraum ausbreiten. Durch eine Bloekiereinrichtung könnte der Gasgenerator 4 in seiner Bewegungsendstellung gesichert werden, so daß er aufgrund seiner Bewegungsenergie nicht hin- und her springen kann.

Die beiden Abdeckklappen 9, 9' können eine Kopplungseinrichtung (nicht dargestellt) aufweisen, die die Abdeckklappen 9, 9' in der geschlossenen Ruhestellung A an ihren beiden aneinander grenzenden Randbereichen 12, 12' in einer sicheren Verbindung hält. Diese Kopplungseinrichtung kann z.B. eine vorspringende Nase oder einen Stift an dem einen Randbereich 12' der Abdeckklappe 9' enthalten, der in eine zugeordnete Ausnehmung an dem anderen Randbereich 12 der oberen Abdeckklappe 9 eingreifen kann.

In den Figuren 8A und 8B ist jedoch eine Ausführungsform für eine Antriebseinrichtung gezeigt, mit welcher die Abdeckeinrichtung 10, insbesondere die zwei Abdeckklappen 9, 9', auf eine andere, als der vorstehend dargestellten Weise in das Gehäuse 1 des Airbagmoduls zurückgezogen werden können. In der oberen Hälfte der Abbildung, d.h. in der Fig. 8A ist die Antriebseinrichtung in der Ruheposition A und in der unteren Hälfte, also in der Fig. 8B in der zurückgezogenen Position B dargestellt.

Der Gasgenerator 4 ist bei dieser, wie auch den folgenden Ausführungsformen, wie bereits weiter oben angegeben wurde, ortsfest im Gehäuse 1 angeordnet. Zwischen dem Gasgenerator 4 und dem Gehäuse 1 ist in Rückzugsrichtung ein Freiraum 98 vorgesehen, in dem eine den Gasgenerator 4 teilweise, insbesondere halbschalig umgebende Hülle in Form einer Kappe oder Wanne 81 als antreibbares Bauteil 5' bewegbar ist. Die Kappe oder Wanne 81 ist mit den Abdeckklappen 9, 9' der Abdeckeinrichtung 10 über die Stangen 16 und 16' verbunden (z.B. Fig. 8A, 8B). Die Kappe oder Wanne 81 kann durch den Gasdruck des zum Füllen des Gassackes 8 verwendeten Füllgases, das vom Gasgenerator 4 erzeugt wird, in die zurückgezogenen Position angetrieben werden.

Für eine lineare Führung der Kappe oder Wanne 81 können in Form von Schlitzen (nicht gezeigt) Führungen vorgesehen sein. Hierdurch wird eine geradlinige Führung der Kappe oder Wanne 81 gegenüber dem ortsfesten Generator 4 erzielt. Als geeignete Führung können z.B. auch die Stifte der Gelenke 18, 18' dienen. In der zurückgezogenen Position wird die Kappe oder Wanne 81 durch eine nicht näher dargestellte Blöckiereinrichtung blockiert. Mit der Kappe oder Wanne 81 ist der Gassack 8 verbunden. Auf diese Weise werden sowohl die beim Zurückziehen der Abdeckeinrichtung, als auch beim Ausstoßen des Gassackes 8 aus der Austrittsöffnung auftretenden Reaktionskräfte von einer einzigen Trägereinrichtung aufgenommen, wobei diese einander entgegengerichteten Reaktionskräfte sich ganz oder teilweise kompensieren. Ferner werden bei diesem Ausführungsbeispiel nur geringe Massen bewegt, so daß eine kurze Reaktionszeit erzielt wird.

Die Besonderheit der Kappe oder Wanne 81 besteht darin, diese einerseits als Antriebseinrichtung für die Abdeckeinrichtung 10 fungiert und andererseits gleichzeitig die Funktion von Steuereinrichtungen 80 übernimmt, denen sie somit zuzurechnen ist. Das nach der Sensorauslösung in Bewegung versetzte Bauteil 5' zur Betätigung der Abdeckeinrichtung 10, das bei der hier behandelten Ausführung die verstellbare Wanne 81 enthält, umgibt den Gasgenerator 4 im Bereich von Gasauslaßöffnungen 82 zur Aufnahme des Gasdruckes aus dem Gasgenerator 4 über seinen Verstellweg unter Bildung eines Gasaufnahmeraumes 88 solange zumindest im wesentlichen dicht, bis die Austrittsöffnung 7 für den Gassack 8 für wenigstens annähernd ungehindertes Vorschieben des letzteren in den Fahrgastraum des Fahrzeugs ausreichend geöffnet ist. Erst dann entläßt die verstellbare Kappe oder Wanne 81 zwischen sich und dem Gasgenerator 4 hindurch den Gasdruck vollständig zum Aufblasen des Gassackes 8.

Dadurch, daß der erste Gasgenerator 4 Gasauslaßöffnungen 82 nur in die Kappe oder Wanne 81 hinein aufweist, wird nach der Zündung des ersten Gasgenerators 4 zunächst ausschließlich die Kappe oder Wanne 81 unter Vergrößerung des Gasaufnahmeraumes 88 vom ersten Gasgenerator 4 weg verschoben, und zwar so weit, bis zwischen der Kappe oder Wanne 81 und dem ersten Gasgenerator 4 unter Öffnung des Gasaufnahmeraumes 88 ein Spalt oder Kanal 89 entsteht, durch den das Treibgas in den Gassack oder Airbag 8 eintreten und diesen aufblasen kann. Dabei wird zumindest im wesentlichen, d.h. bis auf höchstens geringe Leckageverluste, das gesamte Treibgas zunächst zum Verstellen der Kappe oder Wanne 81 verwendet und damit zuerst die Abdeckeinrichtung 10 geöffnet, bevor der Gassack 8 aufgeblasen und dadurch in den Fahrgastraum (nicht gezeigt) vorgeschoben wird.

Die so ausgestaltete Airbagvorrichtung enthält zwei Gasgeneratoren 4, 4' für eine zweistufige Auslösung des Airbags 8. Alternativ kann hierfür auch ein Gasgenerator 4 mit zwei aufeinanderfolgend auslösbaren Stufen zum Einsatz kommen. Bevorzugt erfolgt die Erstzündung elektrisch mittels einer elektrischen Zündeinrichtung 85. Das Seil 23 (siehe Fig. 8A) dient zum Auslösen der Zweitzündung mittels einer mechanischen Zündeinrichtung 86. Die Gasgeneratoren 4, 4' sind über eine Befestigung 90 an dem Gehäuse 1 der Airbagvorrichtung abgestützt.

Dadurch, daß das Abblasen des ersten Gasgenerators 4 lediglich in die auch als Druckschale oder Druckwanne zu bezeichnende Kappe oder Wanne 81 erfolgt, die dadurch bis zur Bildung des Spaltes oder Kanals 89 zwischen sich und dem Gasgenerator von letzterem weg verschoben wird, wird der Vorteil erhalten, daß jedenfalls die Abdeckklappen 9, 9' der Abdeckeinrichtung 10 zuerst aufgehen, und erst danach der Airbag 8 selbst durch den Spalt oder Kanal 89 Druck zum Aufblasen erhält. Dadurch ist bei der hier behandelten Ausführungsform das entsprechende Verfahren zum Auslösen der Airbagvorrichtung gekennzeichnet.

Lediglich der Vollständigkeit halber wird noch darauf hingewiesen, daß die Gasgeneratoren 4, 4' jeweils einen oder einen gemeinsamen Sieb 91 enthalten, der Explosionsteile (nicht gezeigt) u.ä. zurückhält, so daß sie nicht in den Airbag 8 eindringen und diesen beschädigen können. Der Sieb 91 hat die weitere Funktion, die Explosionsteile (nicht gezeigt) u.ä. davon abzuhalten, den Spalt oder Kanal 89 zu verstopfen, was zu einer Fehlfunktion der Airbagvorrichtung führen würde. Zum einen könnte dadurch eventuell das vollständige Öffnen der Abdeckeinrichtung 10 unterbunden werden, indem ein Verklemmen der Kappe oder Wanne 81 durch die Explosionsteile (nicht gezeigt) u.ä. mit den Gasgeneratoren 4, 4' auftreten könnte, und zum anderen könnte das Aufblasen des Gassackes 8 verhindert oder verlangsamt werden, was dazu führen würde, daß der Airbag 8 nicht rechtzeitig zum Insassenschutz zur Verfügung stünde. In der Fig. 8A ist noch eine Öffnung 92 zu Montage der Befestigung der Stangen 16, 16' gezeigt.

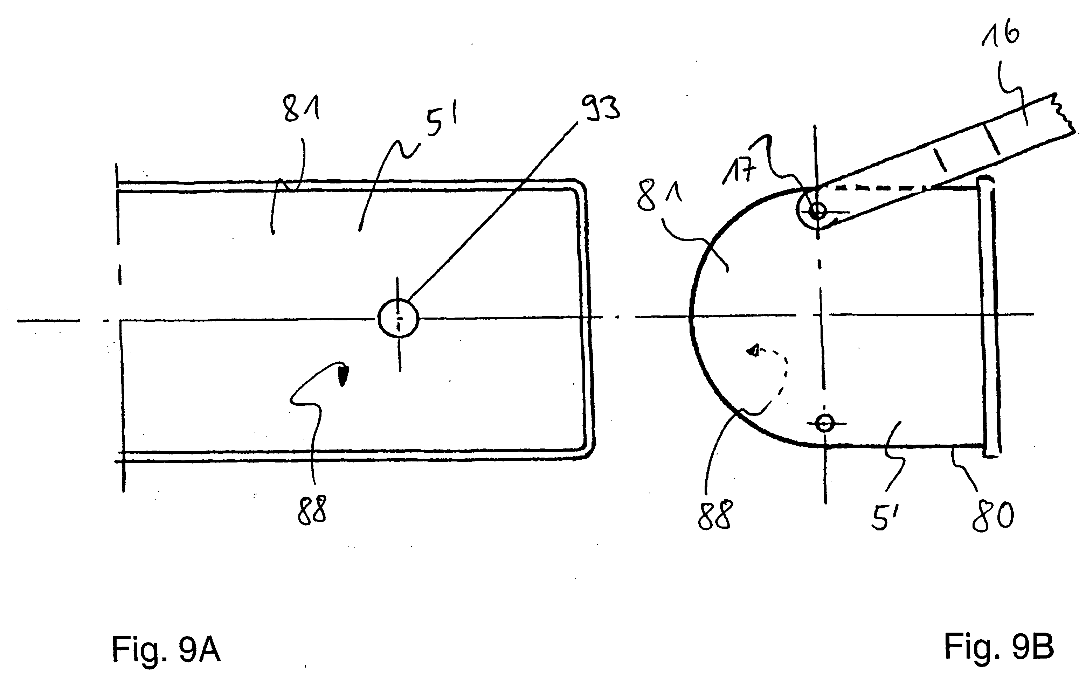

Die Druckwanne oder allgemein Kappe oder Wanne 81 als durch die Sensorauslösung bewegliches Bauteil 5' ist in den Fig. 9A und 9B in einer teilweisen Frontansicht bzw. einer Seitenansicht gezeigt. In der Fig. 9A ist dabei ein Durchgangsloch 93 zur Befestigung der Generatoren 4, 4' gezeigt. Die Druckwanne 81 umschließt das Generatorgehäuse 5 möglichst dicht allseitig, d.h. so, daß die Gasauslaßöffnungen 82 des ersten Generators 4 zunächst nur in den Gasaufnahmeraum 88 zwischen Druckwanne 81 und Gasgeneratoren 4, 4' münden. D.h., daß der erste Generator 4 oder eine erste Stufe eines einzelnen Generators 4 seine/ihre Öffnung nur in die Wanne 81 hat. Erst nach dem Rückschieben der Wanne 81 kann der volle Druck in den Airbag 8 selbst.

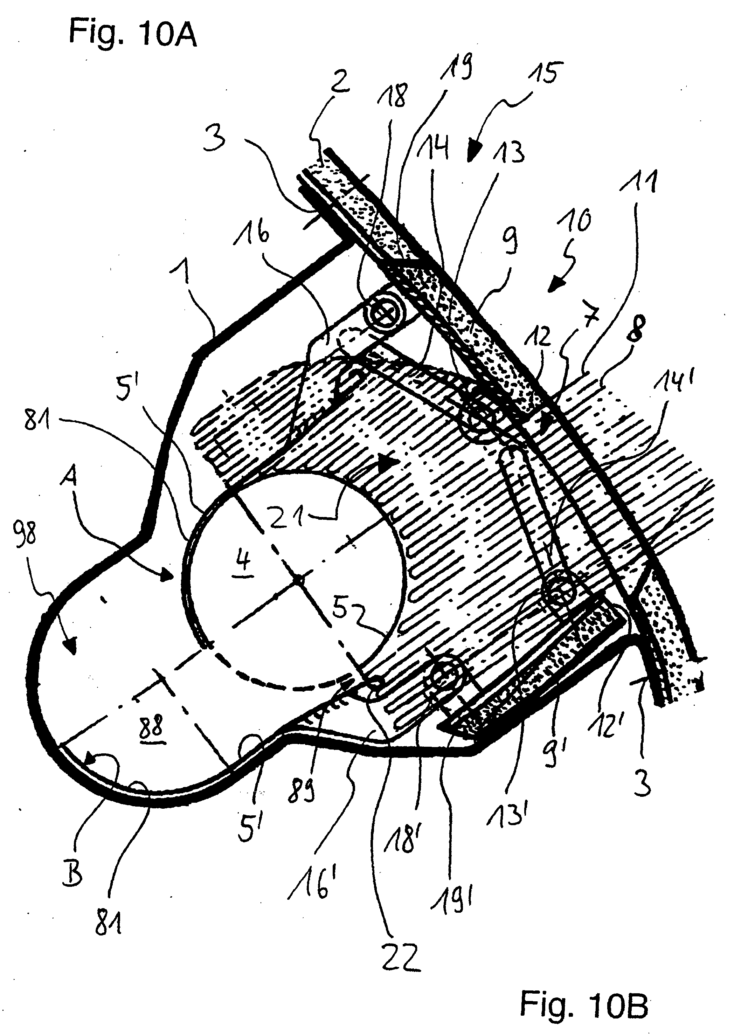

Ein weiteres Ausführungsbeispiel ist in den Fig. 10A und 10B gezeigt, das sich von der Variante nach den Fig. 8A und 8B im wesentlichen durch die Ausführung der Kopplung des wannenförmigen Bauteils 5' und der Abdeckeinrichtung 10 sowie die Führung der Öffnungsbewegung der letzteren unterscheidet. Zur Vermeidung von Wiederholungen wird, soweit in den Fig. 10A und 10B dieselben Teile und Funktionen wie in den Fig. 8A und 8B verdeutlicht sind, auf die Beschreibung zu letzteren verwiesen, die damit analog für die Beschreibung des Ausführungsbeispiels nach den Fig. 10A und 10B heranzuziehen ist.

Noch ein weiteres Ausführungsbeispiel ist in der Fig. 11 gezeigt, wobei es gegenüber den bisherigen Ausführungsvarianten auf einen zweistufigen Generator 4 ankommt, der eine erste Generatorstufe 401 und eine zweite Generatorstufe 402 enthält, die in der Darstellung gut zu erkennen sind. Zur Vereinfachung werden Teile und deren Funktionen, soweit sie bereits im Zusammenhang mit anderen Ausführungsbeispielen früher beschrieben wurden, nicht mehr anhand der Fig. 11 nochmals erläutert, sondern es wird insoweit auf die entsprechenden vorstehenden Ausführungen Bezug genommen. Der besseren Übersichtlichkeit halber ist die Abdeckeinrichtung 10 und ihre Kopplung an das bewegliche Bauteil 5 in Form einer Hülle 5' in der Darstellung der Fig. 11 weggelassen.

Die erste Stufe 401 des zweistufigen Generators 4 hat eine elektrisch auslösbare Zündpatrone 403, über die sie fahrsituationsabhängig auslösbar ist. Klar zu erkennen sind in der ersten Stufe 401 Gasäuslaßöffnungen 82, die von der Austrittsöffnung 7 für den Airbag 8 weg gerichtet sind. Der gesamte Gasgenerator 4 ist in seinem von der Austrittsöffnung 7 für den Airbag 8 abgewandten Bereich von einer Wanne 81 als Hülle 5', die längs Führungen 404 von der Austrittsöffnung 7 für den Airbag 8 wegbewegbar ist, so umgeben, daß die Gasauslaßöffnungen 82 in die Wanne 81 gerichtet sind. Wird die elektrisch auslösbare Zündpatrone 403. und dadurch die erste Generatorstufe 401 ausgelöst, so drängt das dadurch erzeugte Gas durch die Gasauslaßöffnungen 82 in die Wanne 81, die wiederum durch den Gasdruck längs der Führungen 404 vom Gasgenerator 4 wegbewegt wird. Beispielsweise in einer bei den vorher behandelten Ausführungen realisierten Form sind Abdeckeinrichtungen 10 (in der Fig. 11 nicht gezeigt) der Austrittsöffnung 7 für den Airbag 8 an die Wanne 81 so gekoppelt, daß letztere durch ihre Bewegung infolge des Gasdruckes die Abdeckeinrichtungen 10 im Sinne einer Freigabe der Austrittsöffnung 7 für den Airbag 8 betätigt.

In dem Gehäuse 1 der Airbagvorrichtung ist in der Rückzugs- oder allgemein in der Bewegungsrichtung der Wanne 81 ein Freiraum 98 vorgesehen, in den sich die Wanne 81 bei Beaufschlagung durch den Gasdruck aus der ersten Stufe 401 des Gasgenerators 4 hinein bewegt. Die Wanne 81 ist an die Abmessungen und die Form des Gasgenerators 4 so angepaßt, daß nach einem durch diese Anpassung vorgebbaren Bewegungsweg der Wanne 81, vorzugsweise, wenn letztere eine Endstellung am vom Gasgenerator 4 abgewandten Ende des Freiraums 98 erreicht, zwischen der Wanne 81 und dem Gasgenerator 4 ein Spalt oder Kanal 89 entsteht, durch den das Treibgas in den Gassack oder Airbag 8 eintreten und diesen aufblasen kann. Dabei wird bevorzugt zumindest im wesentlichen, d.h. bis auf höchstens geringe Leckageverluste, das gesamte Treibgas zunächst zum Verstellen der Kappe oder Wanne 81 verwendet und damit zuerst die Abdeckeinrichtung 10 geöffnet, bevor der Gassack 8 aufgeblasen und dadurch in den Fahrgastraum (nicht gezeigt) vorgeschoben wird. Alternativ kann wenigstens teilweise gleichzeitig zum Verschieben der Wanne 81 der Airbag 8 aufgeblasen werden.

Drei Seile 23 sind als Zündauslöser an dem vorschiebbaren Gewebe 24 des Gassackes 8 an verschiedenen befestigt und mit einer Zündeinrichtung 405, ähnlich dem elektrischen Zünder 85 nach der Fig. 8A, für die zweite Antriebsstufe 402 des Gasgenerators 4 verbunden. Kann sich durch das Gas der ersten Generatorstufe 401, nachdem damit die Wanne 81 verschoben und folglich die Abdeckeinrichtung 10 geöffnet wurde, der Airbag 8 ungehindert über einen Zustand hinaus ausbreiten, in dem die drei Seile 23 alle gespannt sind, so wird durch diese Bewegungsenergie von jedem der Seile 23 ein Sicherungsstift 406 aus der Zündeinrichtung 405 herausgezogen, wodurch quasi in Form einer UND-Schaltung ein vorgespannter Zündstift 407 freigegeben wird und auf einen Aufschlagzündauslöser 408, der zur Erhöhung der Betriebssicherheit doppelt ausgeführt ist, einer somit mechanisch auslösbaren Zündpatrone 409 schlägt. Die zweite Generatorstufe 402 wird danach ausgelöst, und das mittels letzterer erzeugte Gas tritt durch Gasauslaßöffnungen 82' aus und bläst den Airbag 8 weiter auf.

Die vorstehend beschriebene Funktion und Ausführung der Airbagvorrichtung gemäß der Fig. 11 ist nicht auf das konkrete Ausführungsbeispiel beschränkt. So kann auch ein Gasgenerator 4 mit mehr als zwei Generatorstufen eingesetzt werden, wobei beispielsweise Seile zur Auslösung nachfolgender Stufen mit entsprechend größeren Längen als die Längen jener Seile verwendet werden, über die die jeweils vorangehende Stufe ausgelöst wurde. Damit kann ein "weiches" Aufblasen des Airbags erreicht werden, wodurch das Verletzungsrisiko einer dem sich aufblasenden Airbag ausgesetzten Person verringert wird, da letztere, wenn sie dem sich aufblasenden Airbag zu nahe kommt, nicht zwangsweise die volle Wucht des gesamten noch vom Gasgenerator zu erzeugenden Gases erfährt, sondern die Gaserzeugung jederzeit durch den Kontakt der Person mit dem Airbag dadurch gestoppt werden kann, daß nachfolgende noch nicht ausgelöste Generatorstufen auch nicht mehr ausgelöst werden. Beispielsweise kann auch eine andere Anzahl von Seilen als drei pro Generatorstufe zum Einsatz kommen. Auch können die zweite und weitere Stufen des Gasgenerators über elektrisch auslösbare Zünder ausgelöst werden, indem z.B. von den Seilen entsprechende elektrische Schalter betätigt werden. Anstelle durch die Seile können auch durch andere Einrichtungen Airbagzustände detektiert und in Abhängigkeit davon weitere Generatorstufen ausgelöst werden oder nicht.

## Patentansprüche

1. Airbagvorrichtung beispielsweise in einem Fahrzeug mit einem in Folge einer Sensorauslösung durch einen Gasgenerator (4) mit Treibgas aufblasbaren Gassack (8), der beim Aufblasen in einen Fahrgastraum des Fahrzeugs hin vorschiebbar ist, wobei eine Abdeckeinrichtung (10) vorgesehen ist, die von einem nach der Sensorauslösung in Bewegung versetzten Bauteil der Airbagvorrichtung angetrieben wird und eine Austrittsöffnung für einen Gassack freigibt, wobei sie sich im wesentlichen innerhalb einer Außenkontur der Airbagvorrichtung oder eines die Airbagvorrichtung enthaltenden Fahrzeugteils bewegt,
**dadurch gekennzeichnet,**
**dass** eine Wirkverbindung zwischen der Abdeckeinrichtung (10) und dem letztere nach der Sensorauslösung in Bewegung versetzenden Bauteil vorgesehen ist, und
**dass** der Gassack (8) vor der Sensorauslösung in einem gefalteten Zustand in einem Raum oder Schußkanal zwischen der Abdeckeinrichtung (10) und dem Gasgenerator (4) untergebracht ist.

2. Airbagvorrichtung nach Anspruch 1,
**dadurch gekennzeichnet,**
**dass** die Wirkverbindung durch eine gelenkige Verbindung oder eine Seilverbindung gebildet ist.

3. Airbagvorrichtung nach Anspruch 1 oder 2,
**dadurch gekennzeichnet,**
**dass** das Bauteil infolge des vom Gasgenerator (4) erzeugten Gasdruckes angetrieben oder der Gasgenerator (4) durch das auf das angetriebene Bauteil wirkende Antriebsmittel auslösbar ist.

4. Airbagvorrichtung nach Anspruch 3,
**dadurch gekennzeichnet,**
**dass** der Gasgenerator (4) mehrstufig ist.

5. Airbagvorrichtung nach einem der vorhergehenden Ansprüche,
**dadurch gekennzeichnet,**
**dass** die Abdeckeinrichtung (10) in der Airbagvorrichtung an einer Führung (14, 14') geführt ist.

6. Airbagvorrichtung nach Anspruch 5,
**dadurch gekennzeichnet,**
**dass** die Abdeckeinrichtung (10) zumindest zwei Abdeckklappen (9, 9') aufweist .

7. Airbagvorrichtung nach Anspruch 5 oder 6,
**dadurch gekennzeichnet,**
**dass** die Abdeckeinrichtung (10) nach dem Freilegen der Austrittsöffnung (7) innerhalb eines Gehäuses (1) in einem Aufnahmeraum, in welchem sich der Gassack (8) im Ruhezustand vor der Auslösung der Airbagvorrichtung befindet, positioniert ist.

8. Airbagvorrichtung nach Anspruch 7,
**dadurch gekennzeichnet,**
**dass** die Abdeckeinrichtung (10) nach dem Freilegen der Austrittsöffnung (7) innerhalb einer Airbagmodulgehäusewand in einem Aufnahmeraum, in welchem sich der Gassack (8) im Ruhezustand vor der Auslösung der Airbagvorrichtung befindet, positioniert ist.

9. Airbagvorrichtung nach einem der vorhergehenden Ansprüche,
**dadurch gekennzeichnet,**
**dass** die Abdeckeinrichtung (10) sich blendenförmig öffnende Elemente aufweist.

10. Airbagvorrichtung nach Anspruch 9,
**dadurch gekennzeichnet,**
**dass** die sich blendenförmig öffnenden Elemente eine Schwenkbewegung ausführen.

11. Airbagvorrichtung nach einem der vorhergehenden Ansprüche,
**dadurch gekennzeichnet,**
**dass** das bewegbare Bauteil in einer Bewegungsendstellung durch eine Blockiereinrichtung (25) gehalten ist.

12. Airbagvorrichtung nach Anspruch 11,
**dadurch gekennzeichnet,**
**dass** das bewegbare Bauteil durch eine beim Gasaustritt aus dem Gasgenerator (4) gebildete Reaktionskraft angetrieben ist.

13. Airbagvorrichtung nach einem der vorhergehenden Ansprüche,
**dadurch gekennzeichnet,**
**dass** das bewegbare Bauteil eine Rotations- und/oder eine Translationsbewegung zum Betätigen der Abdeckeinrichtung (10) bzw. der Abdeckklappen (9, 9') ausführt.

14. Airbagvorrichtung nach Anspruch 13,
**dadurch gekennzeichnet,**
**dass** das bewegbare Bauteil in einer Längsführung (6) in der Airbagvorrichtung geführt ist.

15. Airbagvorrichtung nach Anspruch 13 oder 14,
**dadurch gekennzeichnet,**
**dass** das bewegbare Bauteil einen Kolben, einen Drehschieber und/oder den Gasgenerator (4) enthält, der in der Airbagvorrichtung bewegbar gelagert ist, oder als eine einen ortsfest angeordneten Gasgenerator (4) vor der Beaufschlagung zumindest weitgehend dicht umfassende Hülle (30) ausgebildet ist, die durch den vom Gasgenerator (4) erzeugten Gasdruck antreibbar ist.

16. Airbagvorrichtung nach Anspruch 15,
**dadurch gekennzeichnet,**
**dass** die Hülle (30) durch den vom Gasgenerator (4) erzeugten Gasdruck für eine geradlinige Bewegung antreibbar ist.

17. Airbagvorrichtung nach Anspruch 15 oder 16,
**dadurch gekennzeichnet,**
**dass** die Hülle (30) mit dem Gassack (8) verbunden ist.

18. Airbagvorrichtung nach einem der Ansprüche 13 bis 15,
**dadurch gekennzeichnet,**
**dass** das antreibbare Bauteil (5; 5') als ein oder mehrere um eine Drehachse (33) in Drehantrieb versetzbare Drehflügel (32) oder Drehkolben ausgebildet ist.

19. Airbagvorrichtung nach Anspruch 18,
**dadurch gekennzeichnet,**
**dass** am Gasgenerator (4) beidseitig Druckkammern (34) vorgesehen und in jeder Druckkammer (34) zwei Drehflügel (32) bzw. Drehkolben angeordnet sind.

20. Airbagvorrichtung nach einem der Ansprüche 13 bis 15,
**dadurch gekennzeichnet,**
**dass** das antreibbare Bauteil (5; 5') als wenigstens ein linear antreibbarer in einem Zylinder geführter Kolben (39, 40; 44, 45) ausgebildet ist.

21. Airbagvorrichtung nach Anspruch 20,
**dadurch gekennzeichnet,**
**dass** zwei gegenläufig antreibbare Kolben (39, 40) vorgesehen sind, die in einem gemeinsamen Zylinder (36) oder in separaten Zylindern (46, 47) geführt sind.

22. Airbagvorrichtung nach einem der Ansprüche 13, 14, 15, 20 oder 21,
**dadurch gekennzeichnet,**
**dass** der bzw. die Kolben (39, 40; 44, 45) durch ein an der Druckseite des jeweiligen Kolbens zündbares Treibmittel antreibbar ist/sind.

23. Airbagvorrichtung nach einem der vorhergehenden Ansprüche,
**dadurch gekennzeichnet,**
**dass** bei einer aus Hartkunststoff bestehenden Abdeckeinrichtung (10), die aus einem Stück mit einem Armaturentafelkörper (63) ebenfalls aus Hartkunststoff gebildet ist, als Materialschwächungen gebildete Sollbruchstellen (64, 65), welche beim Freilegen der Austrittsöffnung (7) getrennt werden, zwischen der Abdeckeinrichtung (10) und dem Armaturentafelkörper (63) und/oder den Abdeckklappen (9, 9') der Abdeckeinrichtung (10) vorgesehen sind.

24. Airbagvorrichtung nach Anspruch 23,
**dadurch gekennzeichnet,**
**dass** die Sollbruchstellen (64, 65) in Form der Materialschwächungen durch Laserschneiden o.dgl. gebildet sind.

25. Airbagvorrichtung in einem der vorhergehenden Ansprüche,
**dadurch gekennzeichnet,**
**dass** Steuereinrichtungen (80) vorgesehen sind, durch die der vom Gasgenerator (4) erzeugte Gasdruck nach der Sensorauslösung zunächst wenigstens überwiegend zum Antrieb des Bauteils (5') und erst nach einem vorgebbaren Bewegungsweg oder nach einer vorgebbaren Bewegungsdauer des Bauteils (5') vollständig zum Aufblasen des Gassackes (8) bereitgestellt wird.

26. Airbagvorrichtung nach Anspruch 25,
**dadurch gekennzeichnet,**
**dass** die Steuereinrichtungen (80) das nach der Sensorauslösung in Bewegung versetzte Bauteil (5') enthalten, das derart ausgebildet und angeordnet ist, dass es nach der Sensorauslösung zunächst durch den wenigstens überwiegenden Teil des vom Gasgenerator (4) erzeugten Gasdruckes beaufschlagt wird und letzteren erst nach einem vorgebbaren Bewegungsweg oder nach einer vorgebbaren Bewegungsdauer vollständig zum Aufblasen des Gassackes (8) entläßt.

27. Airbagvorrichtung nach Anspruch 25 oder 26,
**dadurch gekennzeichnet,**
**dass** das nach der Sensorauslösung in Bewegung versetzte Bauteil (5') bezüglich des Gasgenerators (4) derart ausgestaltet und verschiebbar ist, dass es nach der Sensorauslösung den wenigstens überwiegenden Teil des vom Gasgenerator (4) erzeugten Gasdruckes aufnimmt, bis die Austrittsöffnung (7) für den Gassack (8) für wenigstens annähernd ungehindertes Vorschieben des letzteren in den Fahrgastraum des Fahrzeugs ausreichend geöffnet ist.

28. Airbagvorrichtung nach einem der Ansprüche 25 bis 27,
**dadurch gekennzeichnet,**
**dass** das nach der Sensorauslösung in Bewegung versetzte Bauteil (5') zur Betätigung der Abdeckeinrichtung (10) eine verstellbare Kappe oder Wanne (81) enthält, die den Gasgenerator (4) im Bereich von Gasauslaßöffnungen (82) zur Aufnahme des Gasdruckes aus dem Gasgenerator (4) über ihren Verstellweg solange zumindest im wesentlichen dicht umgibt, bis die Austrittsöffnung (7) für den Gassack (8) für wenigstens annähernd ungehindertes Vorschieben des letzteren in den Fahrgastraum des Fahrzeugs ausreichend geöffnet ist, und den Gasdruck dann vollständig zum Aufblasen des Gassackes (8) entläßt.

29. Airbagvorrichtung nach einem der Ansprüche 25 bis 28,
**dadurch gekennzeichnet,**
**dass** zusätzlich zum ersten Gasgenerator (4) wenigstens ein weiterer Gasgenerator (4') und/oder in dem Gasgenerator (4) mehrere Gasgeneratorstufen vorgesehen sind, die nacheinander auslösbar sind, und dass die Steuereinrichtungen (80) derart ausgelegt sind, dass Gasdruck zum Bewegen des Bauteils (5') nur vom ersten Gasgenerator (4) oder von der ersten Gasgeneratorstufe des Gasgenerators (4) bereitgestellt wird.

30. Verfahren zum Auslösen einer Airbagvorrichtung beispielsweise in einem Fahrzeug, wobei in Folge einer Sensorauslösung zunächst eine Abdeckeinrichtung von einem nach der Sensorauslösung in Bewegung versetzten Bauteil der Airbagvorrichtung zur Freigabe einer Austrittsöffnung (7) für einen Gassack (8) angetrieben wird, so dass sie sich dabei im wesentlichen innerhalb einer Außenkontur (15) der Airbagvorrichtung oder eines die Airbagvorrichtung enthaltenden Fahrzeugteils bewegt, und dann ein Gassack (8) durch einen Gasgenerator (4) zum Vorschieben in einen Fahrgastraum des Fahrzeugs mit Treibgas aufgeblasen wird, **dadurch gekennzeichnet,**
**dass** die Abdeckeinrichtung (10) von dem letztere nach der Sensorauslösung in Bewegung versetzenden Bauteil über eine Wirkverbindung bewegt wird, und
**dass** der Gassack (8) vor der Sensorauslösung aus einem gefalteten Zustand und untergebracht in einem Raum oder Schußkanal zwischen der Abdeckeinrichtung (10) und dem Gasgenerator (4) infolge der Sensorauslösung mit Treibgas aufgeblasen wird.

31. Verfahren zum Auslösen einer Airbagvorrichtung nach Anspruch 30,
**dadurch gekennzeichnet,**
**dass** der vom Gasgenerator (4) erzeugte Gasdruck nach der Sensorauslösung zunächst wenigstens überwiegend zum Antrieb des Bauteils (5') und erst nach einem vorgebbaren Bewegungsweg oder nach einer vorgebbaren Bewegungsdauer des Bauteils (5') vollständig zum Aufblasen des Gassackes (8) bereitgestellt wird.

32. Verfahren zum Auslösen einer Airbagvorrichtung nach Anspruch 30 oder 31,
**dadurch gekennzeichnet,**
**dass** das Bauteil (5') nach der Sensorauslösung zunächst durch den wenigstens überwiegenden Teil des vom Gasgenerator (4) erzeugten Gasdruckes beaufschlagt wird und letzteren erst nach einem vorgebbaren Bewegungsweg oder nach einer vorgebbaren Bewegungsdauer vollständig zum Aufblasen des Gassackes (8) entläßt.

33. Verfahren zum Auslösen einer Airbagvorrichtung nach einem der Ansprüche 30 bis 32,
**dadurch gekennzeichnet,**
**dass** aus dem Gasgenerator (4) zunächst ein Druckstoß zur Bewegung des Bauteils (5') erfolgt, und dass dann der aufgebaute Druck in den Gassack (8) weitergeleitet wird.

34. Verfahren zum Auslösen einer Airbagvorrichtung nach einem der Ansprüche 30 bis 33,
**dadurch gekennzeichnet,**
**dass** zum Beaufschlagen des nach der Sensorauslösung in Bewegung versetzten Bauteils (5') ausschließlich ein erster Generator (4) und/oder eine erste Generatorstufe des Generators (4) eingesetzt wird, und dass zum späteren Druckaufbau für den Gassack (8) wenigstens ein weiterer Generator (4') bzw. zumindest eine zweite Generatorstufe vorhanden sind/ist.

## Claims

1. Airbag arrangement, for example in a vehicle, having an airbag (8) which can be inflated with propellant gas by a gas generator (4) as a consequence of a sensor being triggered and which, as it inflates, can be advanced into a passenger compartment of the vehicle, a covering device (10) being provided which is driven by a component of the airbag arrangement, which is set in motion after the sensor is triggered and opens up an outlet opening for an airbag, the said covering device moving essentially within an outer contour of the airbag arrangement or of a vehicle part containing the airbag arrangement, **characterized in that** an operative connection is provided between the covering device (10) and the component which sets the latter in motion after the sensor is triggered, and **in that**, before the sensor is triggered, the airbag (8) is accommodated in a folded state in a space or ejection channel between the covering device (10) and the gas generator (4).

2. Airbag arrangement according to Claim 1, **characterized in that** the operative connection is formed by a hinged connection or a cable connection.

3. Airbag arrangement according to Claim 1 or 2, **characterized in that** the component is driven as a consequence of the gas pressure produced by the gas generator (4) or the gas generator (4) can be triggered by the driving means acting upon the driven component.

4. Airbag arrangement according to Claim 3, **characterized in that** the gas generator (4) is a multi-stage gas generator.

5. Airbag arrangement according to one of the preceding claims, **characterized in that** the covering device (10) is guided in the airbag arrangement on a guide (14, 14').

6. Airbag arrangement according to Claim 5, **characterized in that** the covering device (10) has at least two covering flaps (9, 9').

7. Airbag arrangement according to Claim 5 or 6, **characterized in that**, after the outlet opening (7) is exposed, the covering device (10) is positioned within a housing (1) in a receiving space, in which the airbag (8) is in the inoperative state before the airbag arrangement is triggered.

8. Airbag arrangement according to Claim 7, **characterized in that**, after the outlet opening (7) is exposed, the covering device (10) is positioned within an airbag-module housing wall in a receiving space, in which the airbag (8) is in the inoperative state before the airbag arrangement is triggered.

9. Airbag arrangement according to one of the preceding claims, **characterized in that** the covering device (10) has elements which open in the manner of a screen.

10. Airbag arrangement according to Claim 9, **characterized in that** the elements which open in the manner of a screen execute a pivoting movement.

11. Airbag arrangement according to one of the preceding claims, **characterized in that** the moveable component is held in a movement end position by a blocking device (25).

12. Airbag arrangement according to Claim 11, **characterized in that** the moveable component is driven by a reaction force formed when gas is discharged from the gas generator (4).

13. Airbag arrangement according to one of the preceding claims, **characterized in that** the moveable component executes a rotational and/or a translational movement to actuate the covering device (10) or the covering flaps (9, 9').

14. Airbag arrangement according to Claim 13, **characterized in that** the moveable component is guided in a longitudinal guide (6) in the airbag arrangement.

15. Airbag arrangement according to Claim 13 or 14, **characterized in that** the moveable component contains a piston, a rotary slide and/or the gas generator (4), which is mounted in a moveable manner in the airbag arrangement, or is designed as a casing (30) which, before being acted upon, at least substantially tightly encloses a positionally fixed gas generator (4) and can be driven by the gas pressure produced by the gas generator (4).

16. Airbag arrangement according to Claim 15, **characterized in that** the casing (30) can be driven by the gas pressure produced by the gas generator (4) for a linear movement.

17. Airbag arrangement according to Claim 15 or 16, **characterized in that** the casing (30) is connected to the airbag (8).

18. Airbag arrangement according to one of Claims 13 to 15, **characterized in that** the driveable component (5; 5') is designed as one or more rotary wings (32) or rotary pistons which can be set into rotation about an axis of rotation (33).

19. Airbag arrangement according to Claim 18, **characterized in that** pressure chambers (34) are provided on both sides of the gas generator (4), and two rotary wings (32) or rotary pistons are arranged in each pressure chamber (34).

20. Airbag arrangement according to Claims 13 to 15, **characterized in that** the driveable component (5; 5') is designed as at least one piston (39, 40; 44, 45) which can be driven linearly and is guided in a cylinder.

21. Airbag arrangement according to Claim 20, **characterized in that** two pistons (39, 40) which can be driven in opposite directions are provided and are guided in a common cylinder (36) or in separate cylinders (46, 47).

22. Airbag arrangement according to one of Claims 13, 14, 15, 20 or 21, **characterized in that** the piston or pistons (39, 40; 44, 45) can be driven by a propellant which can be ignited on the pressure side of the particular piston.

23. Airbag arrangement according to one of the preceding claims, **characterized in that**, in a covering device (10) which consists of hard plastic and is formed integrally with a dashboard body (63) likewise consisting of hard plastic, predetermined breaking points (64, 65) which are formed as thinned sections of material and which are separated when the outlet opening (7) is exposed are provided between the covering device (10) and the dashboard body (63) and/or the covering flaps (9, 9') of the covering device (10).

24. Airbag arrangement according to Claim 23,
**characterized in that** the predetermined breaking points (64, 65) are formed in the form of thinned sections of material by laser cutting or the like.

25. Airbag arrangement according to one of the preceding claims, **characterized in that** control devices (80) are provided, by means of which the gas pressure produced by the gas generator (4) is first of all at least predominantly provided, after the sensor is triggered, for driving the component (5') and, only after a predeterminable path of movement or after a predeterminable duration of movement of the component (5'), is entirely provided for inflating the airbag (8).

26. Airbag arrangement according to Claim 25, **characterized in that** the control devices (80) contain the component (5') which is set in motion after the sensor is triggered and is designed and arranged in such a manner that, after the sensor is triggered, it is first of all acted upon by the at least predominant part of the gas pressure produced by the gas generator (4) and, only after a predeterminable path of movement or after a predeterminable duration of movement, does it completely release the said gas pressure to inflate the airbag (8).

27. Airbag arrangement according to Claim 25 or Claim 26, **characterized in that** the component (5') which is set in motion after the sensor is triggered is designed and can be displaced with respect to the gas generator (4) in such a manner that, after the sensor is triggered, it absorbs the at least predominant part of the gas pressure produced by the gas generator (4) until the outlet opening (7) for the airbag (8) is sufficiently opened to allow an at least virtually unimpeded advance of the latter into the passenger compartment of the vehicle.

28. Airbag arrangement according to Claims 25 to 27, **characterized in that** the component (5') which is set in motion after the sensor is triggered and is used for actuating the covering device (10) contains an adjustable cap or trough (81) which at least substantially and tightly surrounds the gas generator (4) in the region of gas outlet openings (82) for receiving the gas pressure from the gas generator (4) along its adjustment path until the discharge opening (7) for the airbag (8) is sufficiently opened to allow an at least virtually unimpeded advance of the latter into the passenger compartment of the vehicle, and then releases the gas pressure completely to inflate the airbag (8).

29. Airbag arrangement according to one of Claims 25 to 28, **characterized in that**, in addition to the first gas generator (4), at least one further gas generator (4') and/or, in the gas generator (4), a plurality of gas generator stages are provided which can be triggered successively, and **in that** the control devices (80) are designed in such a manner that gas pressure for moving the component (5') is provided only by the first gas generator (4) or by the first gas generator stage of the gas generator (4).

30. Process for triggering an airbag arrangement, for example, in a vehicle, in which, as a consequence of a sensor being triggered, first of all a covering device is driven by a component of the airbag arrangement, which component is set in motion after the sensor is triggered, in order to open up a discharge opening (7) for an airbag (8), so that the said covering device moves essentially within an outer contour (15) of the airbag arrangement or a vehicle part containing the airbag arrangement, and then an airbag (8) is inflated with propellant gas by a gas generator (4) for the purpose of advancing it into a passenger compartment of the vehicle, **characterized in that** the covering device (10) is moved by the component which sets the latter in motion after the sensor is triggered, via an operative connection, and **in that**, before the sensor is triggered, the airbag (8) being accommodated in a folded state and being accomodated in a space or ejection channel between the covering device (10) and the gas generator (4), and as a consequence of the sensor being triggered, is inflated with propellant gas.

31. Process for triggering an airbag arrangement according to Claim 30, **characterized in that** the gas pressure produced by the gas generator (4) is provided, after the sensor is triggered, initially at least predominantly in order to drive the component (5') and, only after a predeterminable path of movement or after a predeterminable duration of movement of the component (5'), is provided completely for inflating the airbag (8).

32. Process for triggering an airbag arrangement according to Claim 30 or 31, **characterized in that**, after the sensor is triggered, the component (5') is first of all acted upon by the at least predominant part of the gas pressure produced by the gas generator (4) and, only after a predeterminable path of movement or after a predeterminable duration of movement, does it completely release the said gas pressure in order to inflate the airbag (8).

33. Process for triggering an airbag arrangement according to one of Claims 30 to 32, **characterized in that** there is first of all a pressure surge from the gas generator (4) in order to move the component (5'), and **in that** the pressure which is built up is then conducted into the airbag (8).

34. Process for triggering an airbag arrangement according to one of Claims 30 to 33, **characterized in that**, in order to act upon the component (5') which is set in motion after the sensor is triggered, use is exclusively made of a first generator (4) and/or a first generator stage of the generator (4), and **in that**, for the later build-up of pressure for the airbag (8), at least one further generator (4') and/or at least one second generator stage are/is provided.

## Revendications

1. Dispositif d'airbag, par exemple dans un véhicule, avec un sac de gaz (8) gonflable avec du gaz propulseur par un générateur de gaz (4) suite à un déclenchement d'un capteur, qui peut se projeter en avant lors de son gonflement dans un habitacle du véhicule, un dispositif de recouvrement (10) étant prévu, qui est entraîné par un composant du dispositif d'airbag mis en mouvement après le déclenchement du capteur et libère une ouverture de sortie pour un sac de gaz, suite à quoi il se déplace essentiellement à l'intérieur d'un contour extérieur du dispositif d'airbag ou d'une partie du véhicule contenant le dispositif d'airbag, **caractérisé en ce qu'**on prévoit une liaison effective entre le dispositif de recouvrement (10) et le dernier composant mis en mouvement après le déclenchement du capteur, et **en ce que** le sac de gaz (8) est logé à l'état replié, avant le déclenchement du capteur, dans un espace ou canal de projection entre le dispositif de recouvrement (10) et le générateur de gaz (4).

2. Dispositif d'airbag selon la revendication 1, **caractérisé en ce que** la liaison effective est constituée par une liaison articulée ou une liaison par câble.

3. Dispositif d'airbag selon la revendication 1 ou 2, **caractérisé en ce que** suite à la pression de gaz produite par le générateur de gaz (4), le composant est entraîné, ou le générateur de gaz (4) peut être déclenché par des moyens d'entraînement agissant sur le composant entraîné.

4. Dispositif d'airbag selon la revendication 3, **caractérisé en ce que** le générateur de gaz (4) est à plusieurs étages.

5. Dispositif d'airbag selon l'une des revendications qui précèdent, **caractérisé en ce que** l'élément de recouvrement (10) est guidé sur une glissière (14, 14') dans le dispositif d'airbag.

6. Dispositif d'airbag selon la revendication 5, **caractérisé en ce que** le dispositif de recouvrement (10) présente au moins deux volets de recouvrement (9, 9').

7. Dispositif d'airbag selon la revendication 5 ou 6, **caractérisé en ce que** le dispositif de recouvrement (10) est positionné après le dégagement de l'ouverture de sortie (7), à l'intérieur d'un boîtier (1) situé dans un espace de rangement dans lequel le sac de gaz (8) se trouve en position de repos avant le déclenchement du dispositif d'airbag.

8. Dispositif d'airbag selon la revendication 7, **caractérisé en ce que** le dispositif de recouvrement (10) est positionné, après le dégagement de l'ouverture de sortie (7), à l'intérieur d'une paroi de boîtier de module d'airbag situé dans un espace de rangement dans lequel le sac de gaz (8) se trouve en position de repos avant le déclenchement du dispositif d'airbag.

9. Dispositif d'airbag selon l'une des revendications qui précèdent, **caractérisé en ce que** le dispositif de recouvrement (10) présente des éléments s'ouvrant en formant des diaphragmes.

10. Dispositif d'airbag selon la revendication 9, **caractérisé en ce que** les éléments s'ouvrant en formant des diaphragmes exécutent un pivotement.

11. Dispositif d'airbag selon l'une des revendications qui précèdent, **caractérisé en ce que** le composant mobile est maintenu dans une position de déplacement terminale par un dispositif de blocage (25).

12. Dispositif d'airbag selon la revendication 11, **caractérisé en ce que** le composant mobile est entraîné par une force de réaction engendrée lors de la sortie du gaz hors du générateur de gaz (4).

13. Dispositif d'airbag selon l'une des revendications qui précèdent, **caractérisé en ce que** le composant mobile exécute un mouvement de rotation et/ou de translation lors de l'actionnement du dispositif de recouvrement (10) ou des volets de recouvrement (9, 9').

14. Dispositif d'airbag selon la revendication 13, **caractérisé en ce que** le composant mobile est guidé dans une glissière longitudinale (6) ménagée dans le dispositif d'airbag.

15. Dispositif d'airbag selon la revendication 13 ou 14, **caractérisé en ce que** le composant mobile contient un piston, un tiroir rotatif et/ou le générateur de gaz (4) qui est monté mobile dans le dispositif d'airbag ou réalisé sous forme d'enveloppe (30) entourant hermétiquement, du moins dans une large mesure, un générateur de gaz (4) placé fixement, avant l'exposition à la pression, qui peut être entraînée par la pression du gaz produit par le générateur de gaz (4).

16. Dispositif d'airbag selon la revendication 15, **caractérisé en ce que** l'enveloppe (30) peut être entraînée par la pression du gaz produit par le générateur de gaz (4) en vue d'un déplacement linéaire.

17. Dispositif d'airbag selon la revendication 15 ou 16, **caractérisé en ce que** l'enveloppe (30) est liée au sac de gaz (8).

18. Dispositif d'airbag selon l'une des revendications 13 à 15, **caractérisé en ce que** le composant (5 ; 5') pouvant être entraîné est réalisé sous forme d'une ou de plusieurs ailes rotatives (32) ou pistons rotatifs pouvant être entraînés en rotation autour d'un axe de rotation (33).

19. Dispositif d'airbag selon la revendication 18, **caractérisé en ce que** des chambres de compression (34) sont prévues de part et d'autre du générateur de gaz (4) et **en ce que** deux ailes rotatives (32) ou pistons rotatifs sont agencés dans chaque chambre de compression (34).

20. Dispositif d'airbag selon l'une des revendications 13 à 15, **caractérisé en ce que** le composant (5 ; 5') pouvant être entraîné est réalisé sous forme d'au moins un piston (39, 40 ; 44, 45) entraînable linéairement guidé dans un cylindre.

21. Dispositif d'airbag selon la revendication 20, **caractérisé en ce que** deux pistons (39, 40) entraînables en sens contraire sont prévus, lesquels sont guidés dans un cylindre commun (36) ou dans des cylindres séparés (46, 47).

22. Dispositif d'airbag selon l'une des revendications 13, 14, 15, 20 ou 21, **caractérisé en ce que** le ou les pistons (39, 40 ; 44, 45) est/sont entraînables par un agent propulseur amorçable au niveau de la face de pression du piston respectif.

23. Dispositif d'airbag selon l'une des revendications qui précèdent, **caractérisé en ce que** dans le cas d'un dispositif de recouvrement (10) constitué de plastique dur, qui est fait d'une seule pièce avec un corps de tableau de bord (63) également en plastique dur, on prévoit des zones de rupture préférentielle (64, 65) réalisées sous forme d'affaiblissements de matière qui sont séparées lors du dégagement de l'ouverture de sortie (7), entre le dispositif de recouvrement (10) et le corps de tableau de bord (63) et/ou les volets de recouvrement (9, 9') du dispositif de recouvrement (10).

24. Dispositif d'airbag selon la revendication 23, **caractérisé en ce que** les zones de rupture préférentielle (64, 65) sont réalisées sous forme d'affaiblissements de matière par découpe laser ou similaire.

25. Dispositif d'airbag selon l'une des revendications qui précèdent, **caractérisé en ce qu'**on prévoit des dispositifs de réglage (80) qui, dans un premier temps, après le déclenchement du capteur, mettent à disposition la pression du gaz produit par le générateur de gaz (4), au moins de manière prépondérante, pour l'entraînement du composant (5'), et seulement après un itinéraire de déplacement prédéfinissable ou après une durée de déplacement prédéfinissable du composant (5'), la mettent entièrement à disposition en vue de gonfler le sac de gaz (8).

26. Dispositif d'airbag selon la revendication 25, **caractérisé en ce que** les dispositifs de réglage (80) contiennent le composant (5') mis en mouvement après le déclenchement du capteur, composant réalisé et agencé de manière à ce que dans un premier temps, après le déclenchement du capteur, il soit exposé à la partie prépondérante, au moins, de la pression du gaz produit par le générateur de gaz (4), et ne laisse s'échapper cette dernière qu'après un itinéraire de déplacement prédéfinissable ou après une durée de déplacement prédéfinissable, entièrement pour gonfler le sac de gaz (8).

27. Dispositif d'airbag selon la revendication 25 ou 26, **caractérisé en ce que** le composant (5') mis en mouvement après le déclenchement du capteur est configuré et peut coulisser, par rapport au générateur de gaz (4), de manière à ce qu'après le déclenchement du capteur, il reçoive la partie prépondérante, au moins, de la pression du gaz produit par le générateur de gaz (4), jusqu'à ce que l'ouverture de sortie (7) pour le sac de gaz (8) soit suffisamment ouverte pour une projection au moins à peu près sans obstacle de ce dernier dans l'habitacle du véhicule.

28. Dispositif d'airbag selon l'une des revendications 25 à 27, **caractérisé en ce que** le composant (5') mis en mouvement après le déclenchement du capteur, contient un couvercle ou carter (81) déplaçable pour manoeuvrer le dispositif de recouvrement (10), qui entoure hermétiquement, du moins essentiellement, sur son itinéraire de déplacement, le générateur de gaz (4) dans la zone d'orifices de sortie de gaz (82) pour recevoir la pression du gaz en provenance du générateur de gaz (4), au moins jusqu'à ce que l'ouverture de sortie (7) pour le sac de gaz (8) soit suffisamment ouverte, pour une projection au moins à peu près sans obstacle de ce dernier dans l'habitacle du véhicule, et qui laisse ensuite s'échapper complètement la pression du gaz en vue du gonflement du sac de gaz (8).

29. Dispositif d'airbag selon l'une des revendications 25 à 28, **caractérisé en ce qu'**en plus du premier générateur de gaz (4), on prévoit au moins un autre générateur de gaz (4') et/ou plusieurs étages de générateur de gaz dans le générateur de gaz (4), qui sont déclenchables les uns après les autres, et **en ce que** les dispositifs de réglage (80) sont conçus de façon à ce que la pression du gaz soit mise à disposition pour la mise en mouvement du composant (5') uniquement à partir du premier générateur de gaz (4) ou à partir du premier étage de générateur de gaz du générateur de gaz (4).

30. Procédé pour déclencher un dispositif d'airbag, par exemple dans un véhicule, dans lequel dans un premier temps, suite à un déclenchement d'un capteur, un dispositif de recouvrement est entraîné par un composant du dispositif d'airbag mis en mouvement après le déclenchement du capteur, en vue de dégager une ouverture de sortie (7) pour un sac de gaz (8), de façon à ce qu'il se déplace à la suite de cela essentiellement à l'intérieur d'un contour extérieur (15) du dispositif d'airbag ou d'une partie du véhicule contenant le dispositif d'airbag, et ensuite un sac de gaz (8) est gonflé par un générateur de gaz (4) pour le projeter dans un habitacle du véhicule, avec un gaz propulseur, **caractérisé en ce que** le dispositif de recouvrement (10) est déplacé par le dernier composant mis en mouvement après le déclenchement du capteur, via une liaison effective, et **en ce que** le sac de gaz (8) est gonflé avec du gaz propulseur, d'un état replié avant le déclenchement du capteur et logé dans un espace ou canal de projection situé entre le dispositif de recouvrement (10) et le générateur de gaz (4), suite au déclenchement du capteur.

31. Procédé pour déclencher un dispositif d'airbag selon la revendication 30, **caractérisé en ce que** la pression du gaz produit par le générateur de gaz (4) est mise à disposition, dans un premier temps, au moins pour une partie prépondérante, pour l'entraînement du composant (5'), et seulement après un itinéraire de déplacement prédéfinissable ou après une durée de déplacement prédéfinissable du composant (5'), entièrement pour gonfler le sac de gaz (8).

32. Procédé pour déclencher un dispositif d'airbag selon la revendication 30 ou 31, **caractérisé en ce que** le composant (5') est exposé dans un premier temps, après le déclenchement du capteur, à la partie prépondérante au moins de la pression du gaz produit par le générateur de gaz (4) et laisse s'échapper cette dernière uniquement après un itinéraire de déplacement prédéfinissable ou après une durée de déplacement prédéfinissable, entièrement pour gonfler le sac de gaz (8).

33. Procédé pour déclencher un dispositif d'airbag selon l'une des revendications 30 à 32, **caractérisé en ce que** dans un premier temps, une poussée de pression est produite à partir du générateur de gaz (4), pour mettre le composant (5') en mouvement, et **en ce que** la pression établie est transmise dans le sac de gaz (8).

34. Procédé pour déclencher un dispositif d'airbag selon l'une des revendications 30 à 33, **caractérisé en ce que** pour exposer à une pression le composant (5') mis en mouvement après le déclenchement du capteur, on utilise exclusivement un premier générateur (4) et/ou un premier étage de générateur du générateur (4), et **en ce que** pour l'établissement ultérieur de la pression prévue pour le sac de gaz (8), on prévoit au moins un autre générateur (4') ou au moins un second étage de générateur.
